# EUROPEAN PATENT APPLICATION

(11) **EP 2 983 428 A1**
(43) Date of publication of application: **10.02.2016**
(21) Application number: 13881038.7
(22) Date of filing: 04.04.2013
(51) Int. Cl.: H04W 72/04, H04W 16/28, H04W 28/16

(54) **WIRELESS COMMUNICATION METHOD, WIRELESS COMMUNICATION SYSTEM, WIRELESS STATION, AND WIRELESS TERMINAL**

(71) Applicant: Fujitsu Limited, Kawasaki-shi, Kanagawa 211-8588 (JP)
(72) Inventor: TANAKA, Yoshinori, Kawasaki-shi Kanagawa 211-8588 (JP)
(74) Representative: Ward, James Norman
(86) International application number: PCT/JP2013/002351
(87) International publication number: WO 2014/162357

(57) **Abstract**

An object of the disclosed technology is to provide a wireless communication method, a wireless communication system, a wireless station, and a wireless terminal capable of efficiently allocating radio resources and improving communication performance.

The wireless communication method includes: obtaining a plurality of pieces of configuration information from a wireless station by a wireless terminal, the plurality of pieces of configuration information indicating radio resources reserved for transmitting reference signals for individual wireless terminals; transmitting signals from the wireless station to the wireless terminal, the signals designating use modes in relation to use of the radio resources that are indicated by the plurality of respective pieces of configuration information; and receiving the signals by the wireless terminal and performing communication with the wireless station by using the reference signals for the individual wireless terminals, which are transmitted from the wireless station by the radio resources allocated in accordance with the use modes.

## Description

### FIELD

The present invention relates to a wireless communication method, a wireless communication system, a wireless station, and a wireless terminal.

### BACKGROUND

In recent years, next-generation wireless communication technologies for the purpose of further increasing a speed and capacity of wireless communication by wireless communication systems such as mobile phone systems have been discussed. For example, 3rd Generation Partnership Project (3GPP) as a standards organization has proposed a communication standard called Long Term Evolution (LTE) and a communication standard called LTE-Advanced (LTE-A) based on LTE wireless communication technology.

In an LTE-A system or the like, it is possible to perform communication in various communication schemes such as single antenna communication using a single antenna, multi-input multi-output (MIMO) communication using a plurality of antennas, and Coordinated Multi-Point (hereinafter, also referred to as CoMP) communication. According to the CoMP communication, for example, a plurality of communication points that are geographically distant from each other cooperate and perform communication in order to reduce interference between cells and enhance the intensity of received signals. Each communication point corresponds to a base station, a communication unit, an antenna, or a cell that is formed by the base station, the communication unit, or the antenna. In doing so, transmission and reception between multiple points are adjusted. For downlink CoMP communication, for example, a method of dynamically selecting a communication point to be used for transmission of a signal from among a plurality of communication points and a method for joint transmission of signals from a plurality of communication points to a wireless terminal have been studied.

### Citation List

### Non Patent Literature

NPL 1: 3GPP TS36.211 V10.5.0 (2012-06)
NPL 2: 3GPP TR36.814 V9.0.0 (2010-03)

### SUMMARY

### Technical Problem

However, it is desired to appropriately adjust various communication schemes between cells so as to reduce interference between cells and enhance the intensity of received signals in consideration of delay of control and an increase in signaling in order to realize an improvement in communication performance. Here, it is considered that communication schemes at the respective communication points can vary in various manners depending on wireless terminals in accordance with cell arrangements and communication states. For example, there is a possibility that there are multiple communication points capable of realizing CoMP communication, and the number and the combination of communication points to actually be used for transmitting signals in the CoMP communication vary in various manners. Furthermore, various communication schemes such as single antenna transmission and MIMO communication, for example, other than the CoMP communication are considered. Under such circumstances, it is desired to transmit a reference signal for receiving a signal in order to respond to the communication schemes that can vary in the various manners. If it is not possible to efficiently allocate radio resources to transmit the reference signal at this time, there is a concern that an improvement in the communication performance is limited.

The disclosed technique was achieved in view of the aforementioned circumstances, and an object thereof is to provide a wireless communication method, a wireless communication system, a wireless station, and a wireless terminal that can efficiently allocate radio resources and improve the communication performance.

### Solution to Problem

According to an aspect of the present invention to solve the problem described above and to achieve the above object, there is provided a wireless communication method including: obtaining a plurality of pieces of configuration information from a wireless station by a wireless terminal, the plurality of pieces of configuration information indicating radio resources reserved for transmitting reference signals for individual wireless terminals, transmitting signals from the wireless station to the wireless terminal, the signals designating use modes in relation to use of the radio resources that are indicated by the plurality of respective pieces of configuration information; and receiving the signals by the wireless terminal and performing communication with the wireless station by using the reference signals for the individual wireless terminals, which are transmitted from the wireless station by the radio resources allocated in accordance with the use modes.

### Advantageous Effects of Invention

According to an aspect of the wireless communication method disclosed herein, an effect in which it is possible to efficiently allocate radio resources and to improve communication performance is achieved.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWINGS

[FIG. 1] FIG. 1 is a diagram illustrating a configuration of a wireless communication system according to a first embodiment.
[FIG. 2] FIG. 2 is a functional block diagram illustrating a configuration of a wireless station according to the first embodiment.
[FIG. 3] FIG. 3 is a block diagram illustrating a functional configuration of a wireless terminal according to the first embodiment.
[FIG. 4] FIG. 4 is a diagram illustrating a hardware configuration of the wireless station according to the first embodiment.
[FIG. 5] FIG. 5 is a diagram illustrating a hardware configuration of the wireless terminal according to the first embodiment.
[FIG. 6] FIG. 6 is a sequence diagram illustrating operations of the wireless communication system according to the first embodiment.
[FIG. 7] FIG. 7 is a functional block diagram illustrating configurations of wireless stations according to a second embodiment.
[FIG. 8] FIGs. 8A and 8B are diagrams illustrating configuration information that indicates radio resources reserved for transmitting a reference signals for the individual wireless terminal.
[FIG. 9] FIG. 9 is a table illustrating an exemplary setting of configuration information of the reference signals for the individual wireless terminal and use modes.
[FIG. 10] FIG. 10 is a block diagram illustrating a functional configuration of a wireless terminal according to the second embodiment.
[FIG. 11] FIG. 11 is a sequence diagram illustrating operations of a wireless communication system according to the second embodiment.
[FIG. 12] FIGs. 12A and 12B are tables illustrating an exemplary setting of configuration information of reference signals for the individual wireless terminals and use modes.
[FIG. 13] FIG. 13 is a diagram illustrating a configuration of a wireless communication system according to a third embodiment.
[FIG. 14] FIG. 14 is a table illustrating an exemplary setting of configuration information of reference signals for the individual wireless terminal and use modes.
[FIG. 15] FIG. 15 is a sequence diagram illustrating operations of the wireless communication system according to the third embodiment.
[FIG. 16] FIG. 16 is a diagram illustrating a configuration of a wireless communication system according to a fourth embodiment.
[FIG. 17] FIG. 17 is a diagram illustrating a configuration of a wireless communication system according to a fifth embodiment.

### DESCRIPTION OF EMBODIMENTS

Hereinafter, a description will be given of embodiments of a wireless communication method, a wireless communication system, a wireless station, and a wireless terminal disclosed herein with reference to drawings. The following embodiments are not intended to limit the wireless communication method, the wireless communication system, the wireless station, and the wireless terminal.

### [First Embodiment]

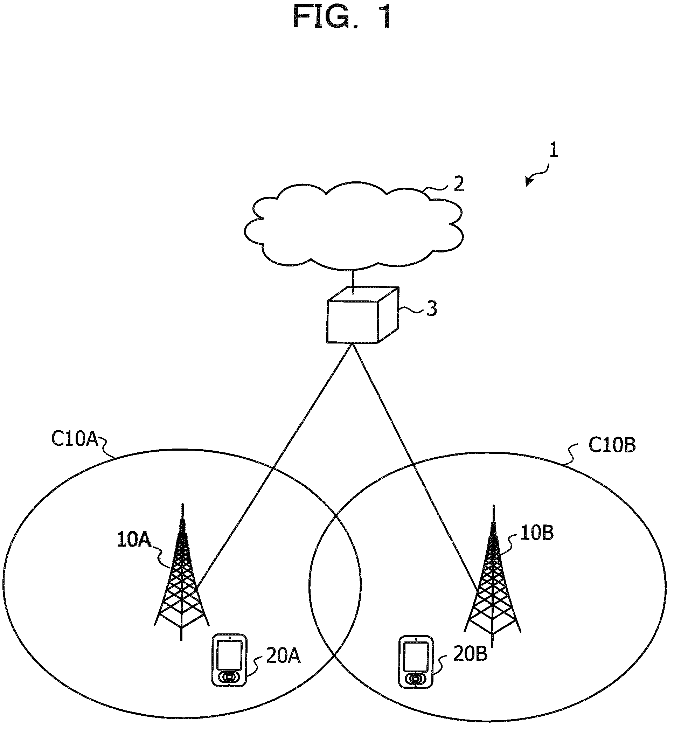

FIG. 1 illustrates a configuration of a wireless communication system 1 according to a first embodiment. As illustrated in FIG. 1, the wireless communication system 1 includes wireless stations 10A and 10B and wireless terminals 20A and 20B. Each of the wireless stations 10A and 10B includes an antenna and corresponds to a communication point. The wireless station 10A forms a cell C10A, and the wireless station 10B forms a cell C10B.

The wireless stations 10A and 10B perform communication between the wireless stations 10A and 10B via wired connection or wireless connection. In addition, the wireless stations 10A and 10B can perform single antenna communication and MIMO communication with the wireless terminals 20A and 20B. Moreover, the wireless stations 10A and 10B can perform CoMP communication with the wireless terminals 20A and 20B. In downlink CoMP communication with the wireless terminal 20A, for example, joint transmission of transmitting data from one or more communication points, which are selected as a set to be used in the downlink CoMP communication from among the wireless stations 10A and 10B, to the wireless terminal 20A by using a radio resource at the same time with the same frequency is performed. In uplink CoMP communication with the wireless terminal 20A, for example, joint reception of receiving data from the wireless terminal 20A by one or more communication points, which are selected as a set to be used in the uplink CoMP communication from among the wireless stations 10A and 10B, and synthesizing received signals between the communication points is performed.

For example, each of the wireless stations 10A and 10B is connected to a network device 3 via wired connection or wireless connection, and the network device 3 is connected to a network 2 via wired connection or wireless connection. In addition, the wireless stations 10A and 10B are provided so as to be able to transmit and receive data and control information via the network device 3 and the network 2.

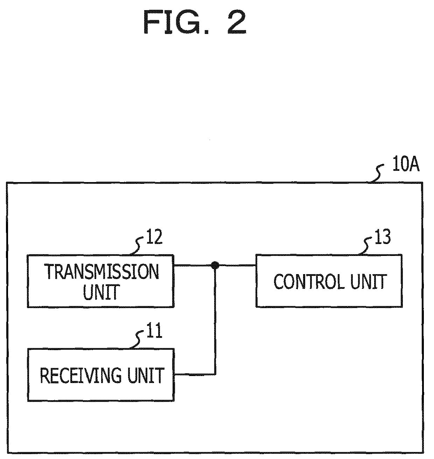

FIG. 2 is a block diagram illustrating a functional configuration of the wireless station 10A. As illustrated in FIG. 2, the wireless station 10A is provided with a receiving unit 11, a transmission unit 12, and a control unit 13. The respective components are connected so as to be able to uni-directionally or bi-directionally input and output signals and data. In addition, a functional configuration and a hardware configuration of the wireless station 10B are the same as those of the wireless station 10A. In the following description, it is assumed that the wireless station 10A is a wireless station that is connecting with the wireless terminal 20A (also referred to as a wireless station or a cell connected to the wireless terminal 20A) and that the wireless station 10B is a wireless station that is connecting with the wireless terminal 20B (also referred to as a connecting wireless station or a connecting cell of the wireless terminal 20B).

The receiving unit 11 receives data signals and control signals via an antenna (physical antenna). The receiving unit 11 receives uplink signals that are transmitted through an uplink data channel and a control channel, for example. As an example of the uplink data channel, a dedicated data channel is exemplified. As examples of the uplink control channel, a random access channel and a dedicated control channel are exemplified. As examples of the received signals, signals for establishing connection, which are transmitted from the wireless terminals 20A and 20B, signals indicating communication levels at the wireless terminals 20A and 20B, and reference signals (also referred to as pilot signals) that are used for channel estimation and demodulation are exemplified.

The transmission unit 12 transmits data signals and control signals via an antenna (physical antenna). In addition, a shared antenna may be provided for both the transmission and the reception, or separate antennas may be provided. The transmission unit 12 transmits downlink signals that are transmitted through a downlink data channel and a control channel, for example. As examples of the downlink data channel, a shared data channel and a dedicated data channel are exemplified. As examples of the downlink control channel, a synchronization channel, a notification channel, a shared control channel, and a dedicated control channel are exemplified. As examples of the transmitted signals, signals for providing system information, control signals transmitted to the wireless terminal 20A being connected through a dedicated control channel, control signals transmitted to the wireless terminal 20A being connected through a dedicated data channel, and data signals transmitted to the wireless terminal 20A being connected through a dedicated data channel are exemplified. As examples of the transmitted signals, paging signals for calling for the wireless terminal 20A when calls for the wireless terminal 20A are received, signals indicating communication levels at the wireless stations 10A and 10B, response signals in response to the signals for establishing connection from the wireless terminals 20A and 20B, and control signals for controlling uplink transmission power from the wireless terminals 20A and 20B are exemplified.
In addition, the transmitted signals include reference signals (also referred to as dedicated pilot signals) for the individual wireless terminals, which are used for channel estimation and demodulation and signals for designating use modes in relation to a plurality of pieces of configuration information that indicate radio resources reserved for transmitting the reference signals for the individual wireless terminals and use of the radio resources indicated by the plurality of pieces of configuration information.

The control unit 13 transmits and receives data and control information to and from the network device 3 and the other wireless station 10B via wired connection or the wireless connection. The received data and the control information is input to the control unit 13 from the receiving unit 11. In addition, the control unit 13 outputs data and control information, which are to be transmitted, to the transmission unit 12. Moreover, the control unit 13 transmits and receives the data and the control information via a wired network through a communication interface. In addition, the control unit 13 manages access to the wireless terminals 20A and 20B and performs scheduling such as allocation of the radio resources to the wireless terminals 20A and 20B. For example, the wireless station 10A includes a plurality of antenna ports, and the control unit 13 allocates antenna ports to be used for communication with the wireless terminals 20A and 20B. In addition, the antenna ports are ports in terms of processing and may not correspond to physical antennas.

For example, the control unit 13 executes processing of providing a plurality of pieces of configuration information, which indicate radio resources reserved for transmitting reference signals for the individual wireless terminals, to the wireless terminal 20A for establishing connection with the wireless terminal 20A. In addition, the control unit 13 may provide the plurality of pieces of configuration information themselves to the wireless terminal 20A, or may provide information, which designates the plurality of configuration information from among information that is stored in advance in the wireless terminal 20A, to the wireless terminal 20A.

Each of the plurality of pieces of configuration information includes arrangement of resource elements (also referred to as time-frequency resources) used for transmitting reference signals for the individual wireless terminals, information of antenna ports used for transmitting the reference signals for the individual wireless terminals, and the number of spatially multiplexed streams (also referred to as a rank or the number of layers) of a transmitted signal, for example. In addition, radio resources reserved for the plurality of pieces of configuration information are different from each other. For example, the reserved radio resources are arranged so as to perpendicularly intersect each other. An example of the resource elements is the minimum amount of time - a frequency unit (symbol - subcarrier) in transmission, and a resource block is formed of a group of resource elements (symbols and subcarriers). The resource block is used as a unit of allocating time-frequency resources.

In addition, the plurality of pieces of configuration information are shared by the wireless station 10A and a different wireless station around the wireless station 10A itself. The different wireless station around the wireless station 10A includes the other wireless station 10B that is capable of performing CoMP communication. In detail, the plurality of pieces of configuration information may be stored in advance in each of the wireless stations 10A and 10B, may be obtained by the wireless stations 10A and 10B from the network device 3, or may be provided from one of the wireless stations 10A and 10B to the other via wired communication or wireless communication.

In addition, the control unit 13 executes processing of transmitting signals for designating the respective use modes of the plurality of pieces of configuration information when data is transmitted. The signals for designating the use modes have a smaller amount of information than the amount of the pieces of configuration information themselves. The control unit 13 determines use modes in accordance with communication states when data is transmitted. As the use modes, a mode indicating that the reserved radio resources are used for transmitting the reference signals for the individual wireless terminals, a mode indicating that the reserved radio resources are not used for transmitting the reference signals of the individual wireless terminals, and a mode indicating that the radio resources reserved for transmitting the reference signals for the individual wireless terminals are used for transmitting data are exemplified. Specifically, the use modes include a mode in which the reserved radio resources transmit the reference signals for the individual wireless terminals with predetermined transmission power, a mode in which the transmission power of the reference signals for the individual wireless terminals is set to zero (non-transmission), and a mode in which the radio resources reserved for the reference signals for the individual wireless terminals are allocated to data signals. If a plurality of wireless terminals are connected to the wireless station 10A, the control unit 13 individually designates the use modes for the plurality of wireless terminals. Then, the control unit 13 performs communication with the wireless terminals 20A and 20B by using the reference signals for the individual wireless terminals, which are transmitted by the radio resources allocated in accordance with the use modes.

The control unit 13 determines the respective use modes of the plurality of pieces of configuration information in accordance with at least one of whether or not the wireless station 10A transmits data to the wireless terminals 20A and 20B by the CoMP communication with the different wireless station 10B, the number of wireless terminals to which the wireless station 10A is connected, a communication level between the wireless station 10A and the connecting wireless terminals, the number of wireless terminals to which the different wireless station 10B is connected, a communication level between the different wireless station 10B and the connecting wireless terminals, a communication scheme by which data is transmitted from the wireless station 10A, and a communication scheme by which data is transmitted from the different wireless station 10B. As the communication scheme, single antenna communication, MIMO communication, and CoMP communication are exemplified. The MIMO communication includes, for example, multi user (MU)-MIMO communication and single user (SU)-MIMO communication. The CoMP communication includes, for example, dynamic point selection (DPS) -CoMP communication and joint-transmission (JT) CoMP communication which will be described later.

The control unit 13 obtains a communication state of other wireless stations around the wireless station 10A when data is transmitted. Other wireless stations include the wireless station 20B that is capable of performing the CoMP communication. In addition, the control unit 13 determines a communication scheme by which data is transmitted and determines the respective use modes of the plurality of pieces of configuration information when the data is transmitted, for example.

In detail, the control unit 13 obtains communication levels between the wireless stations 10A and 10B and the wireless terminal 20A, for example. The communication levels are measured from uplink reference signals or downlink reference signals, for example. The communication levels may be reported by the wireless terminal 20A, or alternatively, a communication level between the wireless station 10A and the wireless terminal 20A may be measured by the wireless station 10A, a communication level between the wireless station 10B and the wireless station 20B may be measured by the wireless station 10B, and then the measured communication level may be reported to the wireless station 10A.

In addition, the control unit 13 transmits a signal for requesting the CoMP communication to the different wireless station 10B (hereinafter, also referred to as a cooperative wireless station or cooperative cell) that is capable of performing the CoMP communication with the wireless terminal 20A, receives a response signal from the different wireless station 10B, and reserves for the CoMP communication.

Then, the control unit 13 selects one or more wireless stations (hereinafter, also referred to as a selected wireless station) from which signals are transmitted to the wireless terminal 20A from among a plurality of wireless stations 10A and 10B that are capable of performing the CoMP communication in accordance with the communication levels and other communication states. The one or more wireless stations selected from among the plurality of wireless stations are one wireless station selected by a DPS operation (DPS-CoMP communication) or two or more wireless stations selected by a JT operation (JT-CoMP communication). The DPS is a method of dynamically selecting a communication point to be used for transmission from among a plurality of communication points. In addition, the JT is a method of performing joint processing (synthesizing processing) on signals transmitted form the plurality of communication points.

At this time, the control unit 13 may select a wireless station in a plurality of steps, for example, by selecting candidate wireless stations from among other wireless stations that are capable of performing the CoMP communication at a predetermined timing and then selecting a wireless station to actually be used from among the candidate wireless stations when data is transmitted.

Then, the control unit 13 exchanges control information between the wireless station 10A and the wireless station 10B and sets a parameter to be used in the CoMP communication. At this time, the reference signals and the control information for the individual wireless terminals may be exchanged between the wireless stations 10A and 10B and the wireless terminal 20A. In doing so, it is determined that the CoMP communication with the wireless terminal 20A is to be performed.

In a case of not performing the CoMP communication with the wireless terminal 20A, the control unit 13 determines whether to perform the single antenna communication, whether to perform the MU-MIMO communication, or whether to perform the SU-MIMO communication in accordance with the communication levels and other communication states. As described above, the control unit 13 determines a communication scheme by which the data is transmitted.

Then, the control unit 13 determines the respective use modes of the plurality of pieces of configuration information, transmits signals indicating the use modes to the wireless terminal 20A, and performs communication with the wireless terminal 20A in accordance with the use modes. If there are other wireless terminals connected, the control unit 13 determines a communication scheme and the respective use modes of the plurality of pieces of configuration information, transmits the signals indicating the use modes, and performs communication in accordance with the use modes when data is transmitted to other wireless terminals in the same manner as in the processing for the wireless terminal 20A.

In contrast, the wireless station 10A operates as a cooperative wireless station of the wireless station 10B that is a wireless station to which the wireless terminal 20B is connected. In such a case, the control unit 13 receives a signal for requesting the CoMP communication from the wireless station 10B, transmits a response signal, and reserves for the CoMP communication. Then, if the wireless station 10B selects the wireless station 10A as the selected wireless station, the control unit 13 exchanges the control information between the wireless station 10A and the wireless station 10B and sets a parameter to be used in the CoMP communication. At this time, the reference signals for the individual wireless terminals and the control information may be exchanged between the wireless stations 10A and 10B and the wireless terminal 20B. In doing so, it is determined that the CoMP communication with the wireless terminal 20B is to be performed. Then, the control unit 13 determines the respective use modes of the plurality of pieces of configuration information, transmits signals indicating the use modes to the wireless terminal 20B, and performs communication with the wireless terminal 20B in accordance with the use modes.

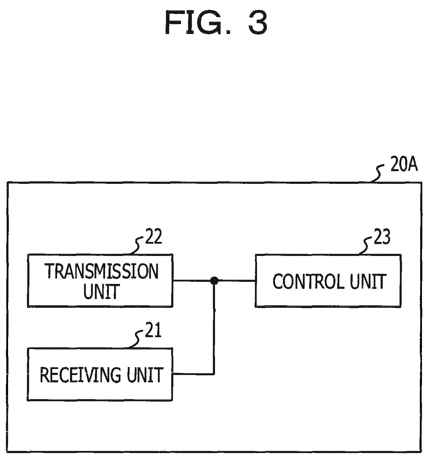

FIG. 3 is a functional block diagram illustrating a configuration of the wireless terminal 20A. As illustrated in FIG. 3, the wireless terminal 20A is provided with a receiving unit 21, a transmission unit 22, and a control unit 23. The respective components are connected to each other so as to be able to unidirectionally or bi-directionally input and output signals and data. In addition, a functional configuration and a hardware configuration of the wireless terminal 20B are the same as the functional configuration and the hardware configuration of the wireless terminal 20A.

The receiving unit 21 receives data signals and control signals, which are transmitted from the wireless stations 10A and 10B, via an antenna. As the receives signals, signals for providing system information, control signals that are transmitted from the connected wireless station 10A through a dedicated control channel, and control signals that are transmitted from the connected wireless station 10A through a dedicated data channel are exemplified. As the received signals, paging signals for calling for the wireless terminal 20A, response signals in response to the signals for establishing connection from the wireless terminal 20A, signals indicating communication levels at the wireless stations 10A and 10B, and control signals for controlling uplink transmission power are exemplified. In addition, the received signals include, for example, reference signals for the individual wireless terminals, which are used for channel estimation and demodulation, and signals indicating the plurality of pieces of configuration information that indicate the radio resources reserved for transmitting the reference signals for the individual wireless terminals and the respective use modes of the plurality of pieces of configuration information.

The transmission unit 22 transmits the data signals and the control signals via an antenna (physical antenna). A shared antenna may be provided for both the transmission and the reception, or separate antennas may be provided. The transmission unit 22 transmits uplink signals that are transmitted through uplink data channel or uplink control channel, for example. As the transmitted signals, signals for establishing connection, signals indicating a communication level at the wireless terminals 20, and reference signals that are used for channel estimation and demodulation are exemplified.

The received data and the control information are input to the control unit 23 from the receiving unit 21. In addition, the data and the control information to be transmitted are output to the transmission unit 22. Moreover, the control unit 23 controls transmission power of the transmitted signals.

In addition, the control unit 23 detects reference signals, which are received from the wireless stations 10A and 10B and are unique to the respective cells, and reference signals for the individual wireless terminals, and obtains communication levels. The communication levels include, for example, received power and received quality. As the communication levels, reference signal received power (RSRP), reference signal received quality (RSRQ) (= received power/a total power value), signal-to-interference ratio (SIR), signal-to-interference-and-noise ratio (SINR) and the like are exemplified.

In addition, the control unit 23 sets the plurality of pieces of configuration information that indicate the radio resources reserved for transmitting the reference signals for the individual wireless terminals. The control unit 23 receives signals indicating the respective use modes of the plurality of pieces of configuration information and performs communication with the wireless station 10A in accordance with the respective use modes of the plurality of pieces of configuration information when downlink data transmission is performed. In a case where the wireless stations 10A and 10B perform the CoMP communication with the wireless terminal 20A, the control unit 23 receives the signals indicating the respective use modes of the plurality of pieces of configuration information from the wireless stations 10A and 10B and performs communication with the wireless stations 10A and 10B in accordance with the respective use modes of the plurality of pieces of configuration information.

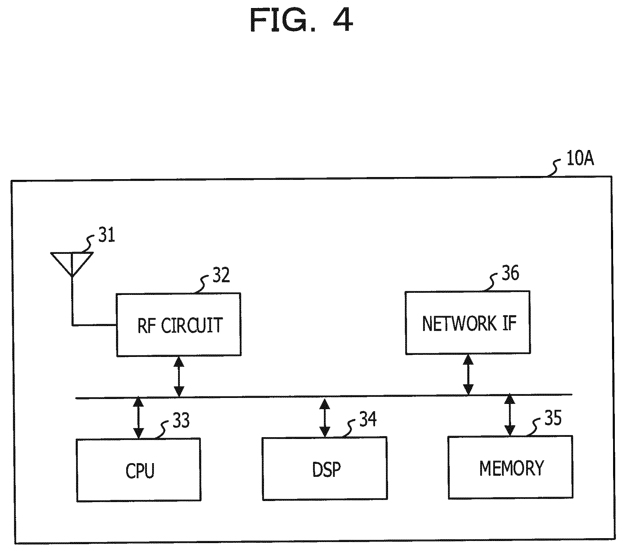

FIG. 4 is a diagram illustrating a hardware configuration of the wireless station 10A. As illustrated in FIG. 4, the wireless station 10A includes, as hardware components, a radio frequency (RF) circuit 32 that is provided with an antenna 31, for example, a central processing unit (CPU) 33, a digital signal processor (DSP) 34, a memory 35, and a network interface (IF) 36. The CPU is connected so as to be able to input and output various signals and data via the network IF 36 such as a switch. The memory 35 includes at least one of a random access memory (RAM) such as a synchronous dynamic random access memory (SDRAM), a read only memory (ROM), and a flash memory and stores programs, control information, and data. The transmission unit 12 and the receiving unit 11 are realized by the RF circuit 32 or the antenna 31 and the RF circuit 32. The control unit 13 is realized by an integrated circuit such as the CPU 33 or an integrated circuit such as the DSP 34, for example.

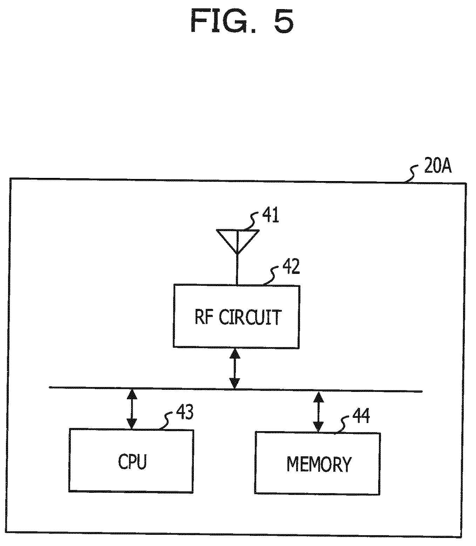

FIG. 5 is a diagram illustrating a hardware configuration of the wireless terminal 20A. As illustrated in FIG. 5, the wireless terminal 20A includes, as hardware components, an RF circuit 42 that is provided with an antenna 41, for example, a CPU 43, and a memory 44. Furthermore, the wireless terminal 20A may include a display device such as a liquid crystal display (LCD) that is connected to the CPU 43. The memory 44 includes at least one of a RAM such as an SDRAM, a ROM, and a flash memory and stores programs, control information, and data. The transmission unit 22 and the receiving unit 21 are realized by the RF circuit 42 or the antenna 41 and the RF circuit 42, for example. The control unit 23 is realized by an integrated circuit such as the CPU 43, for example.

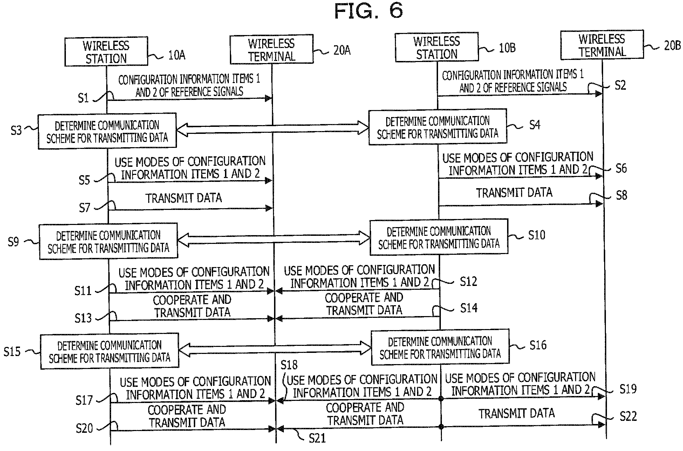

Next, a description will be given of operations of the wireless communication system 1 according to the first embodiment. FIG. 6 is a sequence diagram illustrating a downlink transmission operation of the wireless communication system 1.

As a premise, the wireless stations 10A and 10B are provided so as to be able to perform the single antenna communication, the SU-MIMO communication, the MU-MIMO communication, and the CoMP communication (such as the JT-CoMP communication and the DSP-CoMP communication) as the communication schemes as described above in the wireless communication system 1. The wireless station 10A is a wireless station connected to the wireless terminal 20A and collectively performs CoMP communication processing with the wireless terminal 20A between the wireless station 10A and the wireless station 10B (cooperative wireless station). In addition, the wireless station 10B is a wireless station connected to the wireless terminal 20B and collectively performs CoMP communication processing with the wireless terminal 20B between the wireless station 10B and the wireless station 10A (cooperative wireless station).

In order to reduce interference between cells (between communication points) and realize an improvement in the intensity of received signals at this time, the communication schemes at the respective communication points are dynamically selected at a relatively short period, for example, every time data is transmitted. In addition, it is assumed that the communication schemes at the respective communication points can vary in various manners for the respective wireless terminals in accordance with cell arrangement and communication states. For example, there is a possibility that multiple communication points that can perform the CoMP communication are present, and the number and the combination of communication points actually used for transmitting signals in the CoMP communication vary in the various manners. Furthermore, various communication schemes other than the CoMP communication, such as single antenna transmission and MIMO communication are assumed.

Under such circumstances, it is desired that reference signals (reference signals used for demodulating signals) for the individual wireless terminals for receiving signals are transmitted so as to correspond to the communication schemes that can vary in the various manners. If the radio resources for transmitting the reference signals for the individual wireless terminals are not appropriately allocated at this time, there is a concern that an improvement in communication performance is limited. If it is attempted to allocate the radio resources for transmitting the reference signals for the individual wireless terminals in advance so as to cover the patterns of the communication schemes that can vary in the various manners, for example, a large number of radio resources are desired as radio resources allocated to the transmission of the reference signals for the individual wireless terminals. For this reason, there is a concern that a throughput of data transmission deteriorates and the improvement in the communication performance is limited. If the radio resources to be allocated to the transmission of the reference signals for the individual wireless terminals becomes insufficient due to the communication schemes and radio resources for transmitting the reference signals for the individual wireless terminals overlap between communication points, for example, there is a concern that a decrease in interference between the communication points and an improvement in the intensity of received signals are limited. If cells with relatively small scales are arranged at a relatively high density, in particular, there is a higher possibility that the improvement in the communication performance is limited due to an increase in an influence of the interference.

Thus, a downlink transmission operation is performed as follows in the first embodiment.

As illustrated in FIG. 6, the wireless station 10A provides a plurality of pieces of configuration information (pieces of configuration information 1 and 2 of reference signals for the individual wireless terminals), which indicate radio resources reserved for transmitting the reference signals for the individual wireless terminals, to the wireless terminal 20A (S1). The pieces of configuration information 1 and 2 of the reference signals for the individuals are provided by the wireless station 10A when connection with the wireless terminal 20A is established, for example. Similarly, the wireless station 10B provides a plurality of pieces of configuration information (pieces of configuration information 1 and 2 of reference signals for the individual wireless terminals), which indicate radio resources reserved for transmitting the reference signals for the individual wireless terminals, to the wireless terminal 20B (S2). The pieces of configuration information 1 and 2 of the reference signals for the individual wireless terminals are provided by the wireless station 10B when connection with the wireless terminal 20B is established, for example. The pieces of configuration information 1 and 2 are shared by the wireless stations 10A and 10B. Each of the pieces of configuration information 1 and 2 includes arrangement of resource elements, information of antenna ports, and the number of layers. In addition, the reserved radio resources indicated by the pieces of configuration information 1 and 2 are set so as to be different from each other. In addition, the wireless stations 10A and 10B may provide the pieces of configuration information 1 and 2 to the wireless terminals 20A and 20B again at a predetermined control timing. Moreover, the wireless stations 10A and 10B may update the pieces of configuration information 1 and 2 and provide the pieces of configuration information 1 and 2 to the wireless terminals 20A and 20B at a predetermined control timing.

Then, the wireless station 10A determines a communication scheme by which data is transmitted to the wireless terminal 20A (S3). Similarly, the wireless station 10B determines a communication scheme by which data is transmitted to the wireless terminal 20B (S4). At this time, the wireless station 10A and the wireless station 10B exchange control information and obtain communication states. The determination of the communication scheme is performed every time data is transmitted, for example. The determination of the communication scheme is executed at a relatively shorter interval than that of connection establishment.

In the example of S3, the wireless station 10A determines to perform the SU-MIMO communication, as a communication scheme, with the wireless terminal 20A. In the example of S4, the wireless station 10B determines to perform the SU-MIMO communication, as a communication scheme, with the wireless terminal 20B.

Specifically, the wireless station 10A determines not to perform the CoMP communication with the wireless terminal 20A in accordance with a communication level between the wireless station 10A and the wireless terminal 20A and a communication level between the wireless station 10B and the wireless terminal 20A. The communication level between the wireless station 10A and the wireless terminal 20A can be obtained by receiving reference signals, which are transmitted from the wireless station 10A and are unique to the cells, by the wireless terminal 20A and transmitting a measurement results from the wireless terminal 20A to the wireless station 10A. Alternatively, reference signals that are transmitted from the wireless terminal 20A may be received by the wireless station 10A and may be measured by the wireless station 10A. Then, the wireless station 10A determines to perform the SU-MIMO communication, as a communication scheme, with the wireless terminal 20A since the wireless station 10A does not perform communication with wireless terminals other than the wireless terminal 20A.

Similarly, the wireless station 10B determines not to perform the CoMP communication with the wireless terminal 20B in accordance with a communication level between the wireless station 10A and the wireless terminal 20B and the wireless station 10B and the wireless terminal 20B. The communication level between the wireless station 10B and the wireless terminal 20A can be obtained by receiving reference signals, which are transmitted from the wireless station 10B and are unique to the cells, by the wireless terminal 20A and transmitting measurement results from the wireless terminal 20A to the wireless station 10A. Alternatively, reference signals that are transmitted from the wireless terminal 20A may be received by the wireless station 10B, and measurement results may be transmitted from the wireless station 10B to the wireless station 10A for notification. Then, the wireless station 10B determines to perform the SU-MIMO communication, as a communication scheme, with the wireless terminal 20B since the wireless station 10B does not perform communication with wireless terminals other than the wireless terminal 20B.

Furthermore, the wireless station 10A determines the use modes of the pieces of configuration information 1 and 2 based on the determined communication scheme and other communication states. In addition, the wireless station 10B determines the use modes of the pieces of configuration information 1 and 2 based on the determined communication scheme and other communication states.

As the use modes, it is possible to set, for example, a mode in which the reserved radio resources transmit the reference signals for the individual wireless terminals with predetermined transmission power (non-zero power: NZP), a mode in which the transmission power of the reference signals for the individual wireless terminals is set to zero (zero power: ZP), and a mode in which the radio resources reserved for the reference signals for the individual wireless terminals are allocated to data signals (overray: OVR).

Specifically, in the example of S3, the wireless station 10A sets the use mode of the configuration information item 1 to "NZP" and sets the use mode of the configuration information item 2 to "ZP" since the wireless station 10A itself performs the SU-MIMO communication with the wireless terminal 20A under control of the wireless station 10A and the wireless station 10B performs the SU-MIMO communication with the wireless terminal 20B under control of the wireless station 10B. In the example of S4, the wireless station 10B sets the use mode of the configuration information item 1 to "ZP" and sets the use mode of the configuration information item 2 to "NZP" for the wireless terminal 20B based on reasons that the wireless station 10B itself performs the SU-MIMO communication with the wireless terminal 20B under control of the wireless station 10B and that the wireless station 10A performs the SU-MIMO communication with the wireless terminal 20A under control of the wireless station 10A and based on the use modes of the pieces of configuration information 1 and 2 set by the wireless station 10A for the wireless terminal 20A.

As described above, the use modes of the pieces of configuration information 1 and 2 are set such that the radio resources used for the reference signals for the individual wireless terminals, which are transmitted by the wireless station 10A to the wireless terminal 20A, and the radio resources used for the reference signals for the individual wireless terminals, which are transmitted from the wireless station 10B to the wireless terminal 20B, are different from each other. In doing so, interference between the communication points is reduced when the reference signals for the individual wireless terminals are transmitted, precision of channel estimation for receiving data is improved, and the communication performance is improved.

Next, the wireless station 10A transmits signals indicating the respective use modes of the pieces of configuration information 1 and 2 to the wireless terminal 20A (S5). Similarly, the wireless station 10B transmits signals indicating the respective use modes of the pieces of configuration information 1 and 2 to the wireless terminal 20B (S6). In doing so, the wireless stations 10A and 10B can flexibly set the radio resources to be allocated to the reference signals for the individual terminals, which are transmitted to the wireless terminals 20A and 20B, while reflecting the communication schemes determined at a relatively short interval. In doing so, it is possible to suppress an increase in signaling as compared with a case where the pieces of configuration information indicating the radio resources to be allocated to the reference signals for the individual wireless terminals are constantly provided at a timing of communication scheme determination, which is executed at a relatively short interval.

Then, the wireless station 10A transmits data to the wireless terminal 20A (S7). In the example of S7, the wireless station 10A transmits the reference signals for the individual wireless terminals, which are for receiving data, by using the reserved resource element and the antenna port indicated by the configuration information item 1 in accordance with the use modes transmitted in S5 and then transmits data. The wireless terminal 10A obtains the reference signals for the individual wireless terminals, which are for receiving data, in the use modes transmitted in S5, and receives the data transmitted by the SU-MIMO communication, which is determined in S3, by using the obtained reference signals for the individual wireless terminals.

Similarly, the wireless station 10B transmits data to the wireless terminal 20B (S8). In the example of S8, the wireless station 10B transmits the reference signals for the individual wireless terminals, which are for receiving data, by using the reserved radio resources indicated by the configuration information item 2 in accordance with the use modes transmitted in S5 and then transmits data to the wireless terminal 20B by the SU-MIMO communication in accordance with the communication scheme determined in S3. The wireless terminal 20B specifies the radio resources, from which the reference signals for the individual wireless terminals are transmitted, in accordance with the use modes transmitted in S5 and receives the reference signals for the individual wireless terminals.

In S9 to S14 and S15 to S22, the wireless stations 10A and 10B execute the same processing as in S3 to S8.

Hereinafter, a description will be given of the processing in S9 to S14. The wireless station 10A determines a communication scheme by which data is transmitted to the wireless terminal 20A (S9). Similarly, the wireless station 10A determines a communication scheme by which data is transmitted to the wireless terminal 20B (S10). At this time, the wireless station 10A and the wireless station 10B mutually exchange control information and obtain a communication state.

In the example of S9, the wireless station 10A determines to perform the CoMP communication, as a communication scheme, with the wireless terminal 20A. In the example of S10, the wireless station 10B determines to perform the CoMP communication, as a communication scheme, with the wireless terminal 20A. In the example of S10, the wireless station 10B does not determine a communication scheme for the wireless terminal 20B since there is no data to be transmitted to the wireless terminal 20B under control of the wireless station 10B and the wireless station 10B does not perform communication with the wireless terminal 20B.

Specifically, the wireless station 10A determines, for example, whether or not to perform the CoMP communication with the wireless terminal 20A and determines a selected station from which signals are actually transmitted in the CoMP communication with the wireless terminal 20A in accordance with a communication level between the wireless station 10A and the wireless terminal 20A and a communication level between the wireless station 10B and the wireless terminal 20A.

If the wireless station 10B is selected as the selected wireless station for performing the CoMP communication, the wireless station 10A transmits a signal for requesting the CoMP communication to the wireless station 10B. If the wireless station 10B can operate with the wireless station 10A and execute the CoMP communication with the wireless terminal 20A, the wireless station 10B transmits a response signal indicating that the wireless station 10B can execute the CoMP communication. The wireless station 10A receives the response signal, reserves for the CoMP communication with the wireless terminal 20A, and determines the CoMP communication, as a communication scheme, with the wireless terminal 20A.

In addition, the wireless station 10B transmits a response signal indicating that the wireless station 10B can cooperate with the wireless station 10A and execute the CoMP communication with the wireless terminal 20A as described above, reserves for the CoMP communication with the wireless terminal 20A, and determines the CoMP communication, as a communication scheme, with the wireless terminal 20A.

Furthermore, the wireless station 10A determines the use modes of the pieces of configuration information 1 and 2 based on the determined communication scheme and other communication states. In addition, the wireless station 10B determines the use modes of the pieces of configuration information 1 and 2 based on the determined communication scheme and other communication states.

Specifically, in the example of S9, the wireless station 10A sets the use mode of the configuration information item 1 to "NZP" and sets the use mode of the configuration information item 2 to "OVR" based on the reasons that the wireless station 10A cooperates with the wireless station 10B and performs the CoMP communication with the wireless terminal 20A, that the wireless station 10A does not perform communication with wireless terminals other than the wireless terminal 20A, and that the wireless station 10B does not perform communication with wireless terminals other than the wireless terminal 20A. In the example of S10, the wireless station 10B sets the use mode of the configuration information item 1 to "NZP" and sets the use mode of the configuration information item 2 to "OVR" for the wireless terminal 20B based on the reasons that the wireless station 10B cooperates with the wireless station 10B and performs the CoMP communication with the wireless terminal 20A and that the wireless station 10B does not perform communication with wireless terminals other than the wireless terminal 20A and based on the use modes of the pieces of configuration information 1 and 2 set by the wireless station 10A for the wireless terminal 20A.

When the wireless station 10A and the wireless station 10B perform the CoMP communication with the wireless terminal 20A, the use modes of the pieces of configuration information 1 and 2 are appropriately determined such that the radio resources used for the reference signals for the individual wireless terminals, which are transmitted by the wireless stations 10A and 10B to the wireless terminal 20A, are the same. In addition, it is possible to assume that the communication performance when the reference signals for the individual wireless terminals are transmitted to the wireless terminal 20A is improved by the wireless station 10A and the wireless station 10B performing the CoMP communication with the wireless terminal 20A. Accordingly, the use modes of the pieces of configuration information 1 and 2 are appropriately determined so as to use radio resources, which are not used for the reference signals for the individual wireless terminals, for transmitting data.

Next, the wireless station 10A transmits signals indicating the respective use modes of the pieces of configuration information 1 and 2 to the wireless terminal 20A (S11). Similarly, the wireless station 10B transmits signals indicating the respective use modes of the pieces of configuration information 1 and 2 to the wireless terminal 20A (S12).

Then, the wireless stations 10A and 10B cooperate with each other and transmit data to the wireless terminal 20A (S13 and S14).

Hereinafter, a description will be given of processing in S15 to S22. The wireless station 10A determines a communication scheme by which data is transmitted to the wireless terminal 20A (S15). Similarly, the wireless station 10A determines a communication scheme by which data is transmitted to the wireless terminal 20B (S16). At this time, the wireless station 10A and the wireless station 10B mutually exchange control information and obtain communication states.

In the example of S15, the wireless station 10A determines to perform the CoMP communication, as a communication scheme, with the wireless terminal 20A. In the example of S16, the wireless station 10B determines to perform the CoMP communication, as a communication scheme, with the wireless terminal 20A and to perform the MU-MIMO communication, as a communication scheme, with the wireless terminal 20B.

Specifically, the wireless station 10A determines, for example, whether or not to perform the CoMP communication with the wireless terminal 20A and determines a selected station from which signals are actually transmitted in the CoMP communication with the wireless terminal 20A in accordance with a communication level between the wireless station 10A and the wireless terminal 20A and a communication level between the wireless station 10B and the wireless terminal 20A.

If the wireless station 10B is selected as the selected wireless station for performing the CoMP communication, the wireless station 10A transmits a signal for requesting the CoMP communication to the wireless station 10B. If the wireless station 10B can cooperate with the wireless station 10A and execute the CoMP communication with the wireless terminal 20A, the wireless station 10B transmits a response signal indicating that the wireless station 10B can execute the CoMP communication. The wireless station 10A receives the response signal, reserves for the CoMP communication with the wireless terminal 20A, and determines to perform the CoMP communication, as a communication scheme, with the wireless terminal 20A.

The wireless station 10B transmits the response signal indicating that the wireless station 10B can cooperate with the wireless station 10A and execute the CoMP communication with the wireless terminal 20A as described above, reserves for the CoMP communication with the wireless terminal 20A, and determines to perform the CoMP communication, as a communication scheme, with the wireless terminal 20A. In addition, the wireless station 10B determines not to perform the CoMP communication with the wireless terminal 20B in accordance with a communication level between the wireless station 10A and the wireless terminal 20B and a communication level between the wireless station 10B and the wireless terminal 20B. In addition, the wireless station 10B determines to perform the MU-MIMO communication, as a communication scheme, with the wireless terminal 20B based on the reason that the wireless station 10B performs the CoMP communication with the wireless terminal 20A.

Furthermore, the wireless station 10A determines the use modes of the pieces of configuration information 1 and 2 based on the determined communication scheme and other communication states. In addition, the wireless station 10B determines the use modes of the pieces of configuration information 1 and 2 based on the determined communication scheme and other communication states.

Specifically, in the example of S15, the wireless station 10A sets the use mode of the configuration information item 1 to "NZP" and sets the use mode of the configuration information item 2 to "OVR" for the wireless terminal 20A based on the reasons that the wireless station 10A cooperates with the wireless station 10B and performs the CoMP communication with the wireless terminal 20A, that the wireless station 10A does not perform communication with wireless terminals other than the wireless terminal 20A, and that the wireless station 10B performs communication with wireless terminals other than the wireless terminal 20A.

In the example of S16, the wireless station 10B sets the use mode of the configuration information item 1 to "NZP" and sets the use mode of the configuration information item 2 to "OVR" for the wireless terminal 20A, and sets the use mode of the configuration information item 1 to "OVR" and sets the use mode of the configuration information item 2 to "ZNP" for the wireless terminal 20B based on the reasons that the wireless station 10B cooperates with the wireless station 10A and performs the CoMP communication with the wireless terminal 20A and that the wireless station 10B performs the MU-MIMO communication with the wireless terminal 20B and based on the use modes of the pieces of configuration information 1 and 2 set by the wireless station 10A for the wireless terminal 20A.

When the wireless station 10A and the wireless station 10B performs the CoMP communication with the wireless terminal 20A as described above, the use modes of the pieces of configuration information 1 and 2 are appropriately determined such that the radio resources used for the reference signals for the individual wireless terminals, which are transmitted by the wireless stations 10A and 10B to the wireless terminal 20A, are the same. In addition, the use modes of the pieces of configuration information 1 and 2 are determined such that the radio resources used for the reference signals for the individual wireless terminals, which are transmitted by the wireless stations 10A and 10B in the CoMP communication with the wireless terminal 20A, and the radio resources used for the reference signals for the individual terminals, which are transmitted by the wireless station 10B to the wireless terminal 20B, are different from each other. In addition, it is possible to assume that the communication performance when the reference signals are transmitted to the wireless terminal 20A is improved by the wireless station 10A and the wireless station 10B performing the CoMP communication with the wireless terminal 20A. Accordingly, the use modes of the pieces of configuration information 1 and 2 are determined so as to use the radio resources, which are not used for the reference signals for the individual wireless terminals, for transmitting data.

Next, the wireless station 10A transmits signals indicating the respective use modes of the pieces of configuration information 1 and 2 to the wireless terminal 20A (S17). Similarly, the wireless station 10B transmits signals indicating the respective use modes of the pieces of configuration information 1 and 2 to the wireless terminal 20A (S18), and transmits signals indicating the use modes of the pieces of configuration information 1 and 2 to the wireless terminal 20B (S19).

Then, the wireless stations 10A and 10B cooperate with each other and transmit data to the wireless terminal 20A (S20 and S21). At the same time, the wireless station 10B transmits data to the wireless terminal 20B (S22).

According to the first embodiment, it is possible to efficiently allocate the radio resources reserved for transmitting the reference signals for the individual wireless terminals from the wireless stations 10A and 10B to the wireless terminals 20A and 20B and improve the communication performance in the wireless communication system 1 as described above.

In the first embodiment, although the description was given in which the wireless communication system 1 included the two wireless stations, the number of the wireless stations may be arbitrarily set. In addition, wireless stations that are capable of performing the CoMP communication and wireless stations that are not capable of performing the CoMP communication may be present together.

In the first embodiment, although the description was given in which the wireless communication system 1 included the two wireless terminals, the number of the wireless terminals may be arbitrarily set. In addition, wireless terminals that are capable of performing the CoMP communication and wireless terminals that are not capable of performing the CoMP communication may be present together.

In the first embodiment, although the description was given in which the wireless communication system 1 used the two pieces of configuration information 1 and 2 as the plurality of pieces of configuration information indicating the radio resources reserved for transmitting the reference signals for the individual wireless terminals, the number and the content of the pieces of configuration information are not limited thereto.

### [Second Embodiment]

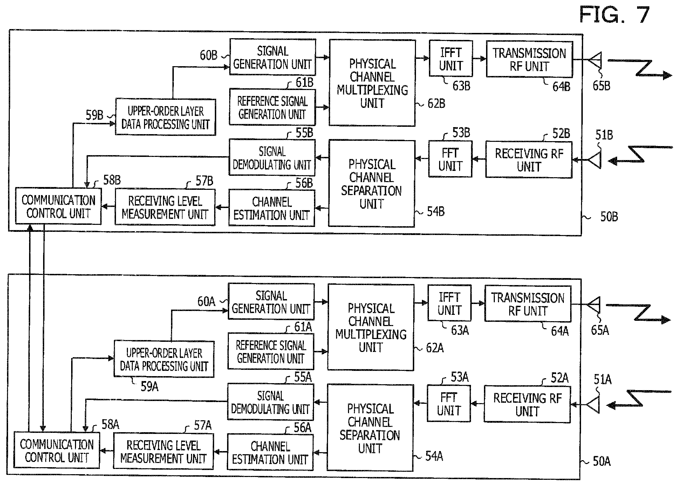

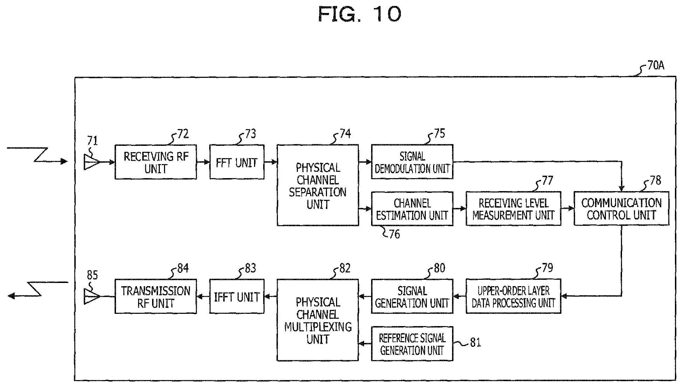

A wireless communication system according to a second embodiment includes 50A and 50B (also referred to as a Cell#1 and a Cell#2) illustrated in FIG. 7, which will be described later, instead of the wireless stations 10A and 10B and includes wireless terminals 70A and 70B (also referred to as a UE#1 and a UE#2) illustrated in FIG. 10, which will be described later, instead of the wireless terminals 20A and 20B. An overall configuration of the wireless communication system according to the second embodiment is the same as that of the wireless communication system 1 illustrated in FIG. 1. For example, each of the wireless stations 50A and 50B is connected to the network device 3 via wired connection or wireless connection, and the network device 3 is connected to the network 2 via wired connection or wireless connection. In addition, the wireless stations 50A and 50B are provided so as to be able to transmit and receive data and control information via the network device 3 and the network 2.

In addition, each of the wireless stations 50A and 50B includes an antenna and corresponds to a communication point. The wireless stations 50A and 50B form cells Cell#1 and Cell#2, respectively. The wireless stations 50A and 50B perform communication between the wireless stations 50A and 50B via wired connection or wireless connection. In addition, the wireless stations 50A and 50B can perform the single antenna communication and the MIMO communication with the wireless terminals 70A and 70B. Moreover, the wireless stations 50A and 50B can perform the CoMP communication with the wireless terminals 70A and 70B.

In the following description, it is assumed that the wireless station 50A is a wireless station (connected cell) connected to the wireless terminal 70A and that the wireless station 50B is a wireless station (connected cell) connected to the wireless terminal 70B.

The connected wireless station 50A collectively performs the CoMP communication processing with the wireless terminal 70A by the plurality of wireless stations 50A and 50B. The connected wireless station 50A selects a communication point (selected wireless station) to be used for the CoMP communication processing from among the wireless stations 50A and 50B. In such a case, the wireless station 50B corresponds the different wireless station (hereinafter, also referred to as a cooperative wireless station or a cooperative cell) that is capable of performing the CoMP communication with the wireless terminal 70A.

The connected wireless station 50B collectively performs the CoMP communication processing with the wireless terminal 70B by the plurality of wireless stations 50A and 50B. The connected wireless station 50B selects a communication point (selected wireless station) used for the CoMP communication processing from among the wireless stations 50A and 50B. In such a case, the wireless station 50A corresponds to the different wireless station (hereinafter, also referred to as a cooperative wireless station or a cooperative cell) that is capable of performing the CoMP communication with the wireless terminal 70B.

FIG. 7 is a block diagram illustrating functional configurations of the wireless stations 50A and 50B in the wireless communication system according to the second embodiment. As illustrated in FIG. 7, the wireless station 50A includes a receiving antenna 51A, a receiving RF unit 52A, a Fast Fourier Transform (FFT) unit 53A, a physical channel separation unit 54A, a signal demodulation unit 55A, a channel estimation unit 56A, a receiving level estimation unit 57A, a communication control unit 58A, an upper-order layer data processing unit 59A, a signal generation unit 60A, a reference signal generation unit 61A, a physical channel multiplexing unit 62A, an Inverse Fast Fourier Transform (IFFT) unit 63A, a transmission RF unit 64A, and a transmission antenna 65A.

In addition, the wireless station 50B includes a receiving antenna 51B, a receiving RF unit 52B, an FFT unit 53B, a physical channel separation unit 54B, a signal demodulation unit 55B, a channel estimation unit 56B, a receiving level estimation unit 57B, a communication control unit 58B, an upper-order layer data processing unit 59B, a signal generation unit 60B, a reference signal generation unit 61B, a physical channel multiplexing unit 62B, an IFFT unit 63B, a transmission RF unit 64B, and a transmission antenna 65B.

The receiving antenna 51A receives wireless signals and outputs the wireless signals to the receiving RF unit 52A. The receiving antenna 51A includes, for example, a plurality of antennas (physical antennas). In addition, the receiving antenna 51A may also be used as the transmission antenna 65A and may be configured so as to be switched between transmission and reception by using a transmission/reception switching unit or the like. The receiving antenna 51A receives uplink signals (data signals and control signals) that are transmitted through an uplink data channel and a control channel, for example. As examples of physical channels through which the signals are received, a physical random access channel (PRACH), a physical uplink shared channel (PUSCH), and a physical uplink control channel (PUCCH) are exemplified. As examples of the received signals, random access channel (RACH) signals for establishing connection, which are transmitted from the wireless terminals 70A and 70B, signals (such as RSRP Report) indicating receiving levels at the wireless terminals 70A and 70B, and reference signals for channel estimation and demodulation are exemplified.

The receiving RF unit 52A performs processing such as analog-to-digital (A/D) conversion on the received signals. The FFT unit 53A performs FFT processing on digital signals. The physical channel separation unit 54A separates signals of the respective channels from signals after being subjected to the FFT processing. The physical channel separation unit 54A extracts uplink reference signals included in the uplink signals. The uplink reference signals include, for example, a sounding reference signal (SRS) used for channel estimation for each uplink frequency and a demodulation RS (DM-RS) for demodulation of the uplink signals. The signal demodulation unit 55A performs demodulation processing on the separated signals of the respective channels based on the control information that is provided or stored in advance and the reference signals for demodulation. The channel estimation unit 56B obtains channel estimation values indicating channel transmission states based on the control information that is provided or stored in advance or the received reference signals. The signals after being subjected to the demodulation processing are subjected to decoding processing based on the channel estimation value. The data signals and the control signals obtained after the decoding processing are output to the communication control unit 58A. In addition, acknowledgement (ACK) and negative acknowledgement (NACK) as results of decoding data signals are output to the communication control unit 58A.

The receiving level estimation unit 57A measures receiving levels (uplink received power and uplink received quality) from the received reference signals. As examples of the receiving levels, SIR, SINR, and the like are exemplified.

The communication control unit 58A transmits and receives data and control information to and from the network device and other wireless stations via wired connection or wireless connection. In addition, the communication control unit 58A manages access to the wireless terminals 70A and 70B and controls transmission power for transmitting signals. As examples of the control of the transmission power, open loop control of compensating for a transmission loss (pass loss) with a communication point, adaptive modulation control, or closed loop control by using a transmission power control (TPC) command is performed. Other details of the communication control unit 58A will be described later.

The upper-order layer data processing unit 59A performs reordering processing and the like of the data signals after being subjected to the decoding processing and obtains uplink user data. In addition, the upper-order layer data processing unit 59A processes downlink user data that is obtained by the network device or other wireless stations and control information to be transmitted, and generates transmission packets.

The signal generation unit 60A encodes and modulates the transmission packets and outputs the transmission packets to the physical channel multiplexing unit 62A. In addition, the signal generation unit 60A generates control signals to be transmitted through a dedicated control channel and outputs the control signals to the physical channel multiplexing unit 62A. The reference signal generation unit 61A generates downlink reference signals and outputs the downlink reference signals to the physical channel multiplexing unit 62A. The downlink reference signals include, for example, a cell-specific reference signal (CRS) unique to a downlink cell, a downlink channel state information reference signal (CSI-RS), and reference signals (DM-RS) for the individual wireless terminals, which are used for downlink channel estimation and demodulation of signals. The CRS is used for measuring downlink communication quality and demodulation of downlink signals and is set so as to correspond to cell identification information (cell ID). The CSI-RS is used for measuring downlink communication quality and can be set for each communication point, for example.

The physical channel multiplexing unit 62A allocates the coded and modulated transmission packets, the control signals, and the reference signals to radio resources of physical channels in accordance with scheduling of the communication control unit 58A. The IFFT unit 63A performs IFFT processing on signals after being multiplexed. The transmission RF unit 64A performs D/A conversion, strain compensation processing, amplification processing, and the like on the signals after the IFFT processing, and outputs the signals to the transmission antenna 65A.

The transmission antenna 65A transmits wireless signals that are input from the transmission RF unit 64A. In addition, the transmission antenna 65A includes, for example, a plurality of antennas (physical antennas). The transmission antenna 65A transmits downlink signals (data signals and control signals) that are transmitted through a downlink data channel and a control channel, for example. As examples of the physical channel through which signals are transmitted, a notification channel PBCH (physical broadcast channel), a physical multicast channel (PMCH), a shared channel PDSCH (physical downlink shared channel), a dedicated control channel PDCCH (physical downlink control channel), and an enhanced-physical downlink control channel (E-PDCCH) are exemplified. As examples of the transmitted signals, paging channel (PCH) signals for calling for the wireless terminals 70A and 70B when calls for the wireless terminals 70A and 70B are received and response signals (random access response: RAR) to the RACH signals are exemplified. As examples of the transmitted signals, signals indicating receiving levels at the wireless station 50A and control signals for controlling uplink transmission power (for example, downlink transmission power information and a TPC command) are exemplified. In addition, the transmitted signals include, for example, reference signals for the individual wireless terminals, which are used for channel estimation and demodulation, and signals designating use modes in relation to a plurality of pieces of configuration information indicating radio resources reserved for transmitting the reference signals for the individual wireless terminals and use of the radio resources indicated by the plurality of respective pieces of configuration information. As examples of the control signals, L1/L2 signaling transmitted through a dedicated control channel to the wireless terminal 70A being connected and Radio Resource Control (RRC) signaling transmitted through a shared channel to the wireless terminal 70A being connected are exemplified. As examples of the control signals, system information that is stored in a master information block (MIB) and a system information block (SIB) and is transmitted through a notification channel or a shared channel designated by the notification channel.

Hereinafter, a detailed description will be given of processing performed by the communication control unit 58A.

The communication control unit 58A performs, for example, scheduling of allocation of radio resources to the wireless terminals 70A and 70B. For example, the wireless station 50A includes a plurality of antenna ports, and the communication control unit 58A allocates the antenna ports to be used for communication with the wireless terminals 70A and 70B. In addition, the antenna ports are ports in terms of processing and may not correspond to physical antennas.

The communication control unit 58A executes processing of providing a plurality of pieces of configuration information, which respectively indicate the radio resources reserved for the reference signals, to the wireless terminal 70A when connection with the wireless terminal 70A is established. In addition, the communication control unit 58A may provide the plurality of pieces of configuration information themselves to the wireless terminal 70A, or may be provide information, which designates the plurality of pieces of configuration information from among pieces of information that are stored in advance in the wireless terminal 70A, to the wireless terminal 70A.

Each of the plurality of pieces of configuration information includes arrangement of resource elements that are used for transmitting the reference signals, information of the antenna ports used for transmitting the reference signals, and the number of layers of the transmitted signals. In addition, the reserved radio resources are mutually different for the plurality of pieces of configuration information. The reserved radio resources are arranged so as to perpendicularly intersect each other, for example.

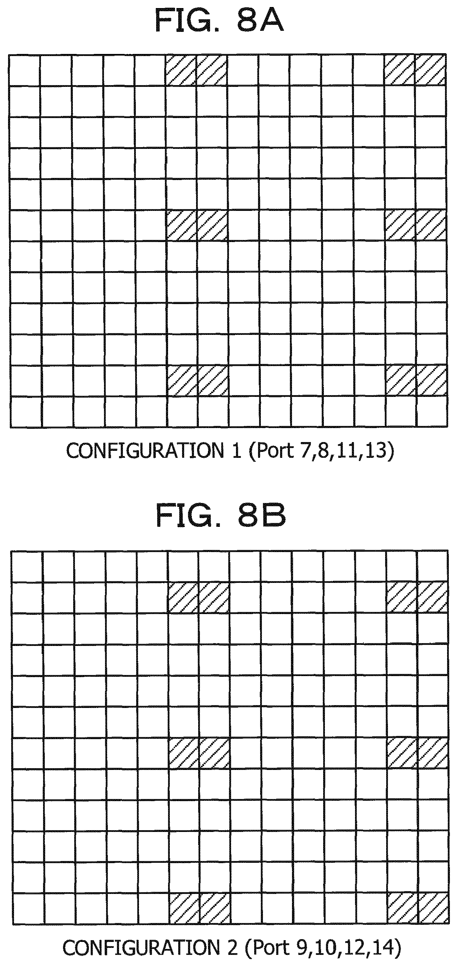

FIGs. 8A and 8B illustrate examples of the plurality of pieces of configuration information. The following description will be given on the assumption that the wireless terminal 70A uses, for example, two pieces of configuration information (hereinafter, also referred to as configuration, conf.) 1 and 2. FIG. 8A illustrates an example of arrangement of resource elements for the configuration information item 1 and an antenna port, and FIG. 8B illustrates an example of arrangement of resource elements for the configuration information item 2. In FIGs. 8A and 8B, the horizontal direction represents time, and the vertical direction represents frequencies. In FIGs. 8A and 8B, hatched resource elements represent DM-RS resources to which reference signals (DM-RS) for the individual wireless terminals are allocated. DM-RS at a maximum of eight antenna ports are orthogonally multiplexed onto the DM-RS resources. For the configuration information item 1, for example, DM-RS at four antenna ports {Ports 9, 10, 12, 14} are orthogonally multiplexed onto the DM-RS resources. For the configuration information item 2, for example, DM-RS at four antenna ports {Ports 7, 8, 11, 13} are orthogonally multiplexed onto the DM-RS resources.

In addition, the pieces of configuration information 1 and 2 are shared by the wireless station 50A and a different wireless station around the wireless station 50A. The different wireless station around the wireless station 50A includes the different wireless station 50B that is capable of performing the CoMP communication. For example, the plurality of pieces of configuration information may be stored in advance in each of the wireless stations 50A and 50B, may be obtained by the wireless stations 50A and 50B from the network device, or may be provided from one of the wireless stations 50A and 50B to the other wireless station via wired communication or wireless communication.

In addition, the communication control unit 58A executes processing of transmitting a signal that designates the respective use modes of the pieces of configuration information 1 and 2 when data is transmitted. The communication control unit 58A determines the respective use modes of the pieces of configuration information 1 and 2 in accordance with the communication states when the data is transmitted. As examples of the use modes, it is possible to set a mode in which the reserved radio resources transmit the reference signals for the individual wireless terminals with predetermined transmission power (NZP), a mode in which the transmission power of the reference signals for the individual wireless terminals is set to zero (ZP), and a mode in which the radio resources reserved for the reference signals for the individual wireless terminals are allocated to data signals (OVR). If a plurality of wireless terminals are connected to the wireless station 50A, the communication control unit 58A individually designates the use modes for the plurality of wireless terminals. Then, the communication control unit 58A performs communication with the wireless terminals 70A and 70B in accordance with the respective use modes of the plurality of pieces of configuration information.

The communication control unit 58A determines the respective use modes of the plurality of pieces of configuration information in accordance with at least one of whether or not the wireless station 50A transmits data to the wireless terminals 70A and 70B in the CoMP communication with the different wireless station 50B, the number of wireless terminals to which the wireless station 50A is connected, a communication level between the wireless station 50A and the connected wireless terminals, the number of wireless terminals to which the different wireless station 50B is connected, a communication level between the different wireless station 50B and the connected wireless terminal, a communication scheme by which the wireless station 50A transmits data, and a communication scheme by which the different wireless station 50B transmits data. The communication schemes include at least one of the single antenna communication, the MIMO communication, and the CoMP communication.

The communication control unit 58A obtains communication states of the different wireless station around the wireless station 50A when data is transmitted. The different wireless station includes the wireless station 50B that is capable of performing the CoMP communication. In addition, the communication control unit 58A determines a communication scheme by which data is transmitted and determines the respective use modes of the plurality of pieces of configuration information when the data is transmitted.

Specifically, the communication control unit 58A obtains communication levels between the wireless stations 50A and 50B and the wireless terminal 70A, for example. The communication levels are measured from uplink reference signals or downlink reference signals, for example. The communication levels may be reported by the wireless terminal 70A, or alternatively, the communication level between the wireless station 50A and the wireless terminal 70A may be measured by the wireless station 50A, the communication level between the wireless station 50B and the wireless terminal 70B may be measured by the wireless station 50B, and information of the communication levels may be provided to the wireless station 50A.

In addition, the communication control unit 58A transmits a signal for requesting the CoMP communication to the communication control unit 58B in the wireless station 50B that is capable of performing the CoMP communication with the wireless terminal 70A, receives a response signal from the communication control unit 58B in the wireless station 50B, and reserves for the CoMP communication.

Then, the communication control unit 58A selects a selected wireless station, from which signals are transmitted to the wireless terminal 70A, from among the plurality of wireless stations 50A and 50B that are capable of performing the CoMP communication, in accordance with the communication levels and other communication states. The selected wireless station is a wireless station selected by a DPS operation, or two or more wireless stations are selected by a JT operation.

At this time, the communication control unit 58A may select a wireless station in a plurality of steps, for example, by selecting candidate wireless stations from among other wireless stations that are capable of performing the CoMP communication at a predetermined timing and then selecting a wireless station to actually be used from among the candidate wireless stations when data is transmitted.

Then, the communication control unit 58A exchange control information between the wireless station 50A and the wireless station 50B and sets a parameter to be used in the CoMP communication. The communication control unit 58A performs processing of exchanging information in relation to a communication point used in the communication with the wireless terminal 70A with communication control units in a cooperative wireless station and the selected wireless station. At this time, reference signals for the individual wireless terminals and control information may be exchanged between the wireless stations 50A and 50B and the wireless terminal 70A. In doing so, it is determined to perform the CoMP communication with the wireless terminal 70A.

If the CoMP communication is not performed with the wireless terminal 70A, the communication control unit 58A determines whether to perform the single antenna communication, whether to perform the MU-MIMO communication, or whether to perform the SU-MIMO communication in accordance with the communication levels and other communication states. As described above, the control unit 13 determines the communication scheme by which data is transmitted.

Then, the communication control unit 58A determines the respective use modes of the pieces of configuration information 1 and 2, transmits signals indicating the use modes to the wireless terminal 70A, and performs communication with the wireless terminal 70A in accordance with the use modes. In a case where a different wireless terminal is connected, the communication control unit 58A determines the communication scheme and the use modes of the pieces of configuration information, transmits the signals indicating the use modes, and performs communication in accordance with the use modes when data is transmitted to the different wireless terminal in the same manner as in the processing for the wireless terminal 70A.

In contrast, the wireless station 50A operates as a cooperative wireless station of the wireless station 50B that is a wireless station connected to the wireless terminal 70B. In such a case, the communication control unit 58A receives a signal for requesting the CoMP communication from the communication control unit 58B in the wireless station 50B, transmits a response signal to the communication control unit 58B in the wireless station 50B, and reserves for the CoMP communication.

Then, if the wireless station 50A is selected as a selected wireless station by the wireless station 50B, the communication control unit 58A exchanges control information with the communication control unit 58B and sets a parameter (a parameter in relation to a CoMP communication gain, for example) used in the CoMP communication. At this time, the reference signals for the individual wireless terminals and the control information may be exchanged between the wireless stations 50A and 50B and the wireless terminal 70B. In doing so, it is determined to perform the CoMP communication with the wireless terminal 70B. Then, the communication control unit 58A determines the respective use modes of the pieces of configuration information 1 and 2, transmits signals indicating the use modes to the wireless terminal 70B, and performs communication with the wireless terminal 70B in accordance with the use modes.

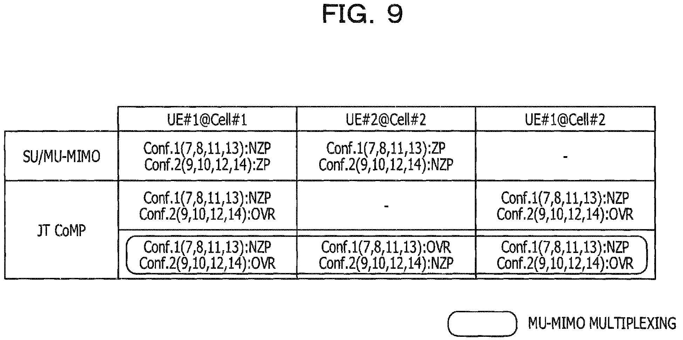

FIG. 9 illustrates an exemplary setting of pieces of configuration information of reference signals for the individual wireless terminals and use modes for the wireless terminals. In the example of FIG. 9, it is assumed that communication from a Cell#1 to a UE#2 is not performed. The upper section in the table in FIG. 9 illustrates a case in which the communication scheme from the Cell#1 to the UE#1 and a communication scheme from a Cell#2 to the UE#2 are the SU-MIMO communication or the MU-MIMO communication. The intermediate section in the table in FIG. 9 illustrates a case in which a communication scheme from the Cell#1 to a UE#1 and a communication scheme from the Cell#2 to the UE#2 are the JT-CoMP communication. The lower section in the table in FIG. 9 illustrates a case in which a communication scheme from the Cell#1 to the UE#1 and a communication scheme from the Cell#2 to the UE#2 are the JT-CoMP communication and a communication scheme from the Cell#2 to the UE#2 is the MU-MIMO communication.

FIG. 10 is a block diagram illustrating a functional configuration of the wireless terminal 70A according to the second embodiment. As illustrated in FIG. 10, the wireless terminal 70A includes a receiving antenna 71, a receiving RF unit 72, an FFT unit 73, a physical channel separation unit 74, a signal demodulation unit 75, a channel estimation unit 76, a receiving level estimation unit 77, a communication control unit 78, an upper-order layer data processing unit 79, a signal generation unit 80, a reference signal generation unit 81, a physical channel multiplexing unit 82, an IFFT unit 83, a transmission RF unit 84, and a transmission antenna 85. In addition, a functional configuration and a hardware configuration of the wireless terminal 70B are the same as the functional configuration and the hardware configuration of the wireless terminal 70A.

The receiving antenna 71 receives wireless signals and outputs the wireless signals to the receiving RF unit 72. The receiving antenna 71 includes, for example, a plurality of antennas (physical antennas). In addition, the receiving antenna 71 may also be used as the transmission antenna 85 and may be configured so as to be switched between transmission and reception by a transmission/reception switching unit or the like. The receiving antenna 71 receives uplink signals (data signals and control signals) that are transmitted through an uplink data channel and a control channel, for example. As examples of the received signals, PCH signals for calling for the wireless terminal 70A when calls for the wireless terminal 70A are received and response signals to RACH signals from the wireless terminal 70A are exemplified. As examples of the received signals, signals indicating receiving levels at the wireless station 50A and control signals for controlling uplink transmission power (downlink transmission power information and a TPC command, for example) are exemplified. In addition, the received signals include, for example, reference signals for the individual wireless terminals, which are used for channel estimation and demodulation and signals for designating the plurality of pieces of configuration information that indicate the radio resources reserved for transmitting the reference signals for the individual wireless terminals and the respective use modes of the plurality of pieces of configuration information. As examples of the control signals, L1/L2 signaling transmitted through a dedicated control channel from the connected wireless station 50A and RRC signaling transmitted through a shared channel from the connected wireless station 50A are exemplified. As examples of the control signals, system information that is stored in the MIB or the SIB and transmitted through a notification channel or a shared channel designated by the notification channel are exemplified.

The receiving RF unit 72 performs processing such as A/D conversion on the received signals. The FFT unit 73 performs FFT processing on digital signals. The physical channel separation unit 74 separates signals of the respective channels from the signals after being subjected to the FFT processing. The physical channel separation unit 74 obtains subcarrier signals from received OFDM (Orthogonal Frequency Division Multiplexing) signals, for example. The signal demodulation unit 75 performs demodulation processing on the separated signals of the respective channels based on control information that is provided or stored in advance and the reference signals for the individual wireless terminals for demodulation. The channel estimation unit 76 obtains channel estimation values indicating channel transmission states based on the control information that is provided or stored in advance and the received reference signals for the individual wireless terminals. The signals after being subjected to the demodulation processing are subjected to decoding processing based on the channel estimation values. User data and control information obtained after the decoding processing are output to the communication control unit 78. In addition, ACK and NACK as results of decoding the data signals are output to the communication control unit 78.

The receiving level estimation unit 77 measures receiving levels (downlink received power and downlink received quality) from the received reference signals unique to cells. As examples of the receiving levels, SIR, SINR, and the like are exemplified.

The communication control unit 78 controls access to the wireless stations 50A and 50B and transmission power for transmitting signals. As the control of the transmission power, open loop control of compensating for a transmission loss (pass loss) with a communication point, adaptive modulation control, or closed loop control by using a transmission power control (TPC) command is performed.

In addition, the communication control unit 78 sets a plurality of pieces of configuration information (pieces of configuration information 1 and 2) that indicate radio resources reserved for transmitting reference signals for the individual wireless terminals. The communication control unit 78 receives signals indicating the respective use modes of the pieces of configuration information 1 and 2 from the wireless station 50A and performs communication with the wireless station 50A in accordance with the respective use modes of the pieces of configuration information 1 and 2 when downlink data transmission is performed. In addition, if the wireless stations 50A and 50B perform the CoMP communication with the wireless terminal 70A, the communication control unit 78 receives signals indicating the use modes from the wireless stations 50A and 50B and performs communication with the wireless stations 50A and 50B in accordance with the use modes of the plurality of pieces of configuration information.

The upper-order layer data processing unit 79 performs reordering processing of the data signals after being subjected to the decoding processing, for example, and obtains downlink user data. In addition, the upper-order layer data processing unit 79 processes uplink user data and control information to be transmitted and generates transmission packets.

The signal generation unit 80 encodes and modulates the transmission packets, adjusts amplifications based on the uplink transmission power information, and outputs the transmission packets to the physical channel multiplexing unit 82. The reference signal generation unit 81 generates uplink reference signals and outputs the uplink reference signals to the physical channel multiplexing unit 82.

The physical channel multiplexing unit 82 allocates the encoded and modulated transmission packets and the reference signals to the radio resources of the physical channels. The IFFT unit 83 performs IFFT processing on the signals after being multiplexed. The transmission RF unit 84 performs D/A conversion, strain compensation processing, amplification processing, and the like on the signals after being subjected to the IFFT processing and outputs the signals to the transmission antenna 85.

The transmission antenna 85 transmits wireless signals that are input from the transmission RF unit 84. In addition, the transmission antenna 85 includes, for example, a plurality of antennas (physical antennas). The transmission antenna 85 transmits uplink signals (data signals and control signals) that are transmitted through an uplink data channel and a control channel, for example. The transmitted signals include, for example, RACH signals for establishing connection, signals indicating receiving levels at the wireless terminal 70, and reference signals for channel estimation and demodulation.

In addition, the hardware configurations of the wireless stations 50A and 50B in the wireless communication system according to the second embodiment are the same as the hardware configuration of the wireless station 10A illustrated in FIG. 4. The receiving antennas 51A and 51B, the receiving RF units 52A and 52B, the transmission RF units 64A and 64B, the transmission antennas 65A and 65B in the wireless stations 50A and 50B are realized, for example, by antennas and RF circuits. In addition, the FFT units 53A and 53B, the physical channel separation units 54A and 54B, the signal demodulation units 55A and 55B, the channel estimation units 56A and 56B, the receiving level estimation units 57A and 57B, the communication control units 58A and 58B, the upper-order layer data processing units 59A and 59B, the signal generation units 60A and 60B, the reference signal generation units 61A and 61B, the physical channel multiplexing units 62A and 62B, and the IFFT units 63A and 63B in the wireless stations 50A and 50B are realized by integrated circuits of a DSP and the like or integrated circuits of a CPU and the like.

In addition, the hardware configuration of the wireless terminal 70A in the wireless communication system according to the second embodiment is the same as the hardware configuration of the wireless terminal 20A illustrated in FIG. 5. The receiving antenna 71, the receiving RF unit 72, the transmission RF unit 84, and the transmission antenna 85 in the wireless terminal 70 are realized, for example, by antennas and RF circuits. The FFT unit 73, the physical channel separation unit 74, the signal demodulation unit 75, the channel estimation unit 76, the receiving level estimation unit 77, the communication control unit 78, the upper-order layer data processing unit 79, the signal generation unit 80, the reference signal generation unit 81, the physical channel multiplexing unit 82, and the IFFT unit 83 in the wireless terminal 70 are realized, for example, by integrated circuits of a CPU and the like.

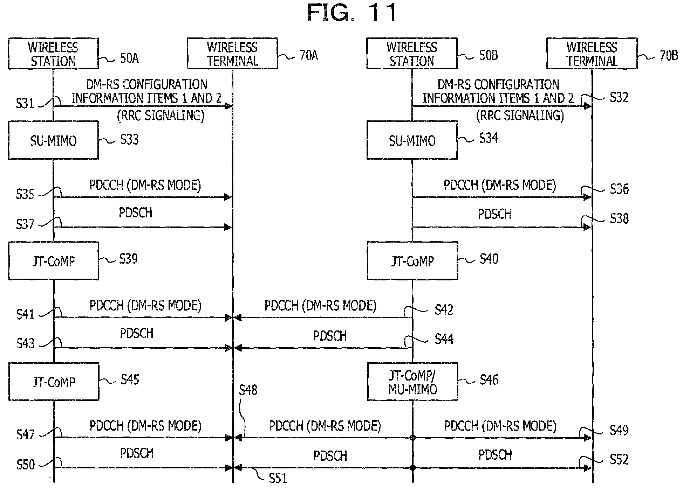

Next, a description will be given of operations of the wireless communication system according to the second embodiment with reference to FIG. 11. FIG. 11 is a sequence diagram illustrating a downlink transmission operation performed by the wireless communication system according to the second embodiment.

As illustrated in FIG. 11, the wireless station 50A provides a plurality of pieces of configuration information (DM-RS pieces of configuration information 1 and 2), which indicate radio resources reserved for transmitting reference signals for the individual wireless terminals, to the wireless terminal 70A (S31). The DM-RS pieces of configuration information 1 and 2 are provided from the wireless station 50A by RRC signaling when connection with the wireless terminal 70A is established, for example. Similarly, the wireless station 50B provides a plurality of pieces of configuration information (DM-RS pieces of configuration information 1 and 2), which indicate radio resources reserved for transmitting reference signals for the individual wireless terminals, to the wireless terminal 70B (S32). The DM-RS pieces of configuration information 1 and 2 are provided from the wireless station 50B by RRC signaling when connection with the wireless terminal 70B is established, for example. The pieces of configuration information 1 and 2 are shared by the wireless stations 50A and 50B. Each of the pieces of configuration information 1 and 2 includes arrangement of resource elements, information of antenna ports, and the number of layers. In addition, the reserved radio resources indicated by the pieces of configuration information 1 and 2 are set so as to be different from each other.

Next, the wireless station 50A determines a communication scheme by which data is transmitted to the wireless terminals 70A and 70B (S33). Similarly, the wireless station 50B determines a communication scheme by which data is transmitted to the wireless terminals 70A and 70B (S34). At this time, the wireless station 50A and the wireless station 50B mutually exchange control information and obtain communication states. The communication schemes are determined every time data is transmitted, for example. The communication schemes are determined at a relatively shorter interval than that of connection establishment. As examples of the communication schemes, the JT-CoMP communication, the SU-MIMO communication, and the MU-MIMO communication can be selected.

In the example of S33, the wireless station 50A determines to perform the SU-MIMO communication, as a communication scheme, with the wireless terminal 70A. In the example of S34, the wireless station 50B determines to perform the SU-MIMO communication, as a communication scheme, with the wireless terminal 70B,

Specifically, the wireless station 50A determines not perform the CoMP communication with the wireless terminal 70A in accordance with a communication level between the wireless station 50A and the wireless terminal 70A and a communication level between the wireless station 50B and the wireless terminal 70A. Then, the wireless station 50A determines to perform the SU-MIMO communication, as a communication scheme, with the wireless terminal 70A since the wireless station 50A does not perform communication with wireless terminals other than the wireless terminal 70A.

The communication level between the wireless station 50A and the wireless terminal 70A can be obtained by receiving reference signals, which are transmitted from the wireless station 50A and are unique to cells, by the wireless terminal 70A and transmitting measurement results from the wireless terminal 70A to the wireless station 50A. Alternatively, reference signals transmitted from the wireless terminal 70A may be received by the wireless station 50A and measurement may be performed by the wireless station 50A. The communication level between the wireless station 50B and the wireless terminal 70A can be obtained by receiving the reference signals, which are transmitted from the wireless station 50B, by the wireless terminal 70A and transmitting measurement results from the wireless terminal 70A to the wireless station 50A. Alternatively, reference signals which are transmitted from the wireless terminal 70A and are unique to cells are received by the wireless station 50B, and measurement result may be transmitted from the wireless station 50B to the wireless station 50A for notification.

Similarly, the wireless station 50B determines not to perform the CoMP communication with the wireless terminal 70B in accordance with a communication level between the wireless station 50A and the wireless terminal 70B and a communication level between the wireless station 50B and the wireless terminal 70B. Then, the wireless station 50B determines to perform the SU-MIMO communication, as a communication scheme, with the wireless terminal 70B since the wireless station 50B does not perform communication with wireless terminals other than the wireless terminal 70B.

Furthermore, the wireless station 50A determines use modes (DM-RS modes) of the pieces of configuration information 1 and 2 based on the determined communication scheme and other communication states. In addition, the wireless station 50B determines use modes of the pieces of configuration information 1 and 2 based on the determined communication scheme and other communication states.

As the use modes, it is possible to set, for example, a mode in which the reserved radio resources transmit the reference signals for the individual wireless terminals with predetermined transmission power (NZP), a mode in which the transmission power of the reference signals for the individual wireless terminals is set to zero (ZP), and a mode in which the radio resources reserved for the reference signals for the individual wireless terminals are allocated to data signals (OVR).

Specifically, in the example of S33, the wireless station 50A sets the use mode of the configuration information item 1 to "NZP" and sets the use mode of the configuration information item 2 to "ZP" as illustrated in the table in FIG. 9 based on the reasons that the wireless station 50A performs the SU-MIMO communication with the wireless terminal 70A under control of the wireless station 50A itself and that the wireless station 50B performs the SU-MIMO communication with the wireless terminal 70B under control of the wireless station 50B. In addition, in the example of S34, the wireless station 50B sets the use mode of the configuration information item 1 to "ZP" and sets the use mode of the configuration information item 2 to "NZP" for the wireless terminal 70B as illustrated in the table in FIG. 9 based on the reasons that the wireless station 50B performs the SU-MIMO communication with the wireless terminal 70B under control of the wireless station 50B itself and that the wireless station 50A performs the SU-MIMO communication with the wireless terminal 70A under control of the wireless station 50A.

As described above, the use modes of the pieces of configuration information 1 and 2 are determined such that the radio resources used for the reference signals for the individual wireless terminals, which are transmitted by the wireless station 50A to the wireless terminal 70A, and the radio resources used for the reference signals for the individual wireless terminals, which are transmitted by the wireless station 50B to the wireless terminal 70B, are different from each other. In doing so, interference between communication points is reduced when the reference signals for the individual wireless terminals are transmitted, precision of channel estimation for receiving data is improved, and communication performance is improved.

Next, the wireless station 50A transmits signals indicating the respective use modes of the pieces of configuration information 1 and 2 to the wireless terminal 70A through a PDCCH (S35). In addition, the wireless station 50A transmits antenna port numbers and the number of layers that are used in practice along with the signals indicating the respective use modes of the pieces of configuration information 1 and 2 through the PDCCH. In addition, the signals indicating the use modes may be transmitted only when the use modes are changed. In addition, the signals indicating the use modes include only a use mode of a configuration information item, which has been changed. Moreover, information indicating changes in content of the pieces of configuration information 1 and 2 may be provided along with the signals indicating the use modes. In addition, the pieces of configuration information 1 and 2 may include arrangement of resource elements, and information of antenna ports to be used and the number of layers may be provided along with the signals indicating the use modes.

Similarly, the wireless station 50B transmits signals indicating the respective use modes of the pieces of configuration information 1 and 2 to the wireless terminal 70B through a PDCCH (S36). In doing so, it is possible to flexibly set the radio resources to be allocated to the reference signals for the individual wireless terminals, which are transmitted by the wireless stations 50A and 50B to the wireless terminals 70A and 70B, while reflecting communication schemes that are determined at a relatively short interval. In doing so, it is possible to further suppress an increase in signaling as compared with a case where the pieces of configuration information indicating the radio resources reserved for transmitting the reference signals for the individual wireless terminals are constantly provided at a timing of communication scheme determination, which is executed at a relatively short interval.

Then, the wireless station 50A transmits data to the wireless terminal 70A through the PDSCH (S37). In the example of S37, the wireless station 50A transmits reference signals for the individual wireless terminals for receiving data by using the reserved resource elements and the antenna ports that are indicated in the configuration information item 1 in accordance with the use modes transmitted in S35, and transmits data. The wireless terminal 70A obtains the reference signals for the individual wireless terminals for receiving the data in the use modes transmitted in S35 and receives the data transmitted by the SU-MIMO communication determined in S33 by using the obtained reference signals for the individual wireless terminals.

Similarly, the wireless station 50B transmits data to the wireless terminal 70B through the PDSCH (S38). In the example of S38, the wireless station 50B transmits the reference signals for the individual wireless terminals for receiving the data by using the reserved radio resources that are indicated by the configuration information item 2 in accordance with the use modes transmitted in S36, and transmits the data to the wireless terminal 70B by the SU-MIMO communication in accordance with the communication scheme determined in S34. The wireless terminal 70B specifies the radio resources, to which the reference signals for the individual wireless terminals are transmitted, in accordance with the use modes transmitted in S36 and receives the reference signals for the individual wireless terminals.

In S39 to S44 and S45 to S52, the wireless stations 50A and 50B perform the same processing as in S33 to S38.

Hereinafter, a description will be given of processing in S39 to S44. The wireless station 50A determines a communication scheme by which data is transmitted to the wireless terminals 70A and 70B (S39). Similarly, the wireless station 50B determines a communication scheme by which data is transmitted to the wireless terminals 70A and 70B (S40). At this time, the wireless station 50A and the wireless station 50B mutually exchange control information and obtain communication states.

In the example of S39, the wireless station 50A determines to perform the CoMP communication, as a communication scheme, with the wireless terminal 70A. In the example of S40, the wireless station 50B determines to perform the CoMP communication, as a communication scheme, with the wireless terminal 70A. In the example of S40, the wireless station 50B does not determine a communication scheme for the wireless terminal 70B since there is no data to be transmitted to the wireless terminal 70B under control of the wireless station 50B and the wireless station 50B does not perform communication with the wireless terminal 70B.

Specifically, the wireless station 50A determines whether or not to perform the CoMP communication with the wireless terminal 70A and determines a selected station from which a signal is actually transmitted in the CoMP communication with the wireless terminal 70A in accordance with a communication level between the wireless station 50A and the wireless terminal 70A and a communication level between the wireless station 50B and the wireless terminal 70A.

If the wireless station 50B is selected as the selected wireless station for performing the CoMP communication, the wireless station 50A transmits a signal for requesting the CoMP communication to the wireless station 50B. If the wireless station 50B can cooperate with the wireless station 50A and execute the CoMP communication with the wireless terminal 70A, the wireless station 50B transmits a response signal indicating that the wireless station 50B can execute the CoMP communication, reserves for the CoMP communication with the wireless terminal 70A, and determines the CoMP communication, as a communication scheme, with the wireless terminal 70A. The wireless station 50A receives the response signal, reserves for the CoMP communication with the wireless terminal 70A, and determines the CoMP communication, as a communication scheme, with the wireless terminal 70A.

Furthermore, the wireless station 50A determines use modes of the pieces of configuration information 1 and 2 based on the determined communication scheme and other communication states. In addition, the wireless station 50B determines use modes of the pieces of configuration information 1 and 2 based on the determined communication scheme and other communication states.

Specifically, in the example of S39, the wireless station 50A sets the use mode of the configuration information item 1 to "NZP" and sets the use mode of the configuration information item 2 to "OVR" as illustrated in the table in FIG. 9 based on the reasons that the wireless station 50A cooperates with the wireless station 50B and performs the JT-CoMP communication with the wireless terminal 70A, that the wireless station 50A itself does not perform communication with wireless terminals other than the wireless terminal 70A, and that the wireless station 50B does not perform communication with wireless terminals other than the wireless terminal 70A. In the example of S40, the wireless station 50B sets the use mode of the configuration information item 1 to "NZP" and sets the use mode of the configuration information item 2 to "OVR" for the wireless terminal 70A as illustrated in the table in FIG. 9 based on the reasons that the wireless station 50B cooperates with the wireless station 50B and performs the CoMP communication with the wireless terminal 70A, that the wireless station 50A does not perform communication with wireless terminals other than the wireless terminal 70A, and that the wireless station 50B itself does not perform communication with wireless terminals other than the wireless terminal 70A.

When the wireless station 50A and the wireless station 50B perform the CoMP communication with the wireless terminal 70A as described above, the use modes of the pieces of configuration information 1 and 2 are appropriately determined such that the radio resources used for the reference signals for the individual wireless terminals, which are transmitted by the wireless stations 50A and 50B to the wireless terminal 70A, are the same. In addition, it is possible to assume that the communication performance of transmitting the reference signals for the individual wireless terminals to the wireless terminal 70A is improved by the wireless station 50A and the wireless station 50B performing the CoMP communication with the wireless terminal 70A. Accordingly, the use modes of the pieces of configuration information 1 and 2 are appropriately determined so as to use the radio resources, which are not used for the reference signals for the individual wireless terminals, for transmitting data.

Next, the wireless station 50A transmits signals indicating the respective use modes of the pieces of configuration information 1 and 2 to the wireless terminal 70A through the PDCCH (S41). Similarly, the wireless station 50B transmits signals indicating the respective use modes of the pieces of configuration information 1 and 2 to the wireless terminal 70A through the PDCCH (S42).

Then, the wireless stations 50A and 50B cooperate with each other and transmit data to the wireless terminal 70A through the PDSCH (S43 and S44).

Hereinafter, a description will be given of processing in S45 to S52. The wireless station 50A determines a communication scheme by which data is transmitted to the wireless terminal 70A (S45). Similarly, the wireless station 50A determines a communication scheme by which data is transmitted to the wireless terminal 70B (S46). At this time, the wireless station 50A and the wireless station 50B mutually exchange control information and obtain communication states.

In the example of S45, the wireless station 50A determines to perform the CoMP communication, as a communication scheme, with the wireless terminal 70A. In the example of S46, the wireless station 50B determines to perform the CoMP communication, as a communication scheme, with the wireless terminal 70A and determines to perform the MU-MIMO communication, as a communication scheme, with the wireless terminal 70B.

Specifically, the wireless station 50A determines whether or not to perform the CoMP communication with the wireless terminal 70A and determines a selected station from which a signal is actually transmitted in the CoMP communication with the wireless terminal 70A in accordance with a communication level between the wireless station 50A and the wireless terminal 70A and a communication level between the wireless station 50B and the wireless terminal 70A.

If the wireless station 50B is selected as the selected wireless station for performing the CoMP communication, the wireless station 50A transmits a signal for requesting the CoMP communication to the wireless station 50B. If the wireless station 50B can cooperate with the wireless station 50A and execute the CoMP communication with the wireless terminal 70A, the wireless station 50B transmits a response signal indicating that the wireless station 50B can execute the CoMP communication. The wireless station 50A receives the response signal, reserves for the CoMP communication with the wireless terminal 70A, and determines to perform the CoMP communication, as a communication scheme, with the wireless terminal 70A.

The wireless station 50B transmits the response signal indicating that the wireless station 50B can cooperate with the wireless station 50A and execute the CoMP communication with the wireless terminal 70A as described above, reserves for the CoMP communication with the wireless terminal 70A, and determines to perform the CoMP communication, as a communication scheme, with the wireless terminal 70A. In addition, the wireless station 50B determines not to perform the CoMP communication with the wireless terminal 70B in accordance with a communication level between the wireless station 50A and the wireless terminal 70B and a communication level between the wireless station 50B and the wireless terminal 70B. Then, the wireless station 50B determines to perform the MU-MIMO communication, as a communication scheme, with the wireless terminal 70B based on the reason that the wireless station 50B performs the CoMP communication with the wireless terminal 70A.

Furthermore, the wireless station 50A determines use modes of the pieces of configuration information 1 and 2 based on the determined communication scheme and other communication states. In addition, the wireless station 50B determines use modes of the pieces of configuration information 1 and 2 based on the determined communication scheme and other communication states.

Specifically, in the example of S45, the wireless station 50A sets the use mode of the configuration information item 1 to "NZP" and sets the use mode of the configuration information item 2 to "OVR" for the wireless terminal 70A as illustrated in the table in FIG. 9 based on the reasons that the wireless station 50A cooperates with the wireless station 50B and performs the CoMP communication with the wireless terminal 70A and that the wireless station 50A itself does not perform communication with wireless terminals other than the wireless terminal 70A.

In the example of S46, the wireless station 50B sets the use mode of the configuration information item 1 to "NZP" and sets the use mode of the configuration information item 2 to "OVR" for the wireless terminal 70A and sets the use mode of the configuration information item 1 to "OVR" and sets the use mode of the configuration information item 2 to "NZP" for the wireless terminal 70B as illustrated in the table in FIG. 9 based on the reasons that the wireless station 50B cooperates with the wireless station 50A and performs the CoMP communication with the wireless terminal 70A and that the wireless station 50B performs the MU-MIMO communication with the wireless terminal 70B.

When the wireless station 50A and the wireless station 50B perform the CoMP communication with the wireless terminal 70A as described above, the use modes of the pieces of configuration information 1 and 2 are appropriately determined such that the radio resources used for the reference signals for the individual wireless terminals, which are transmitted by the wireless stations 50A and 50B to the wireless terminal 70A, are the same. In addition, the use modes of the pieces of configuration information 1 and 2 are appropriately determined such that the radio resources used for the reference signals for the individual wireless terminals, which are transmitted by the wireless stations 50A and 50B in the CoMP communication with the wireless terminal 70A, and the radio resources used for the reference signals for the individual wireless terminals, which are transmitted by the wireless station 50B to the wireless terminal 70B, are different from each other. In addition, it is possible to assume that the communication performance of transmitting the reference signals for the wireless terminals to the wireless terminal 70A is improved by the wireless station 50A and the wireless station 50B performing the CoMP communication with the wireless terminal 70A. Accordingly, the use modes of the pieces of configuration information 1 and 2 are appropriately determined so as to use the radio resources, which are not used for the reference signals for the individual wireless terminals, for transmitting data.

Next, the wireless station 50A transmits signals indicating the respective use modes of the pieces of configuration information 1 and 2 to the wireless terminal 70A through the PDCCH (S47). Similarly, the wireless station 50B transmits signals indicating the respective use modes of the pieces of configuration information 1 and 2 to the wireless terminal 70A through the PDCCH (S48), and transmits signals indicating the respective use modes of the pieces of configuration information 1 and 2 to the wireless terminal 70B through the PDCCH (S49).

Then, the wireless stations 50A and 50B cooperate with each other and transmit data to the wireless terminal 70A through the PDSCH (S50 and S51). In addition, the wireless station 50B transmits data to the wireless terminal 70B through the PDSCH (S52).

According to the second embodiment, it is possible to efficiently allocate the radio resources reserved for transmitting the reference signals for the individual wireless terminals from the wireless stations 50A and 50B to the wireless terminals 70A and 70B and improve the communication performance in the wireless communication system as described above.

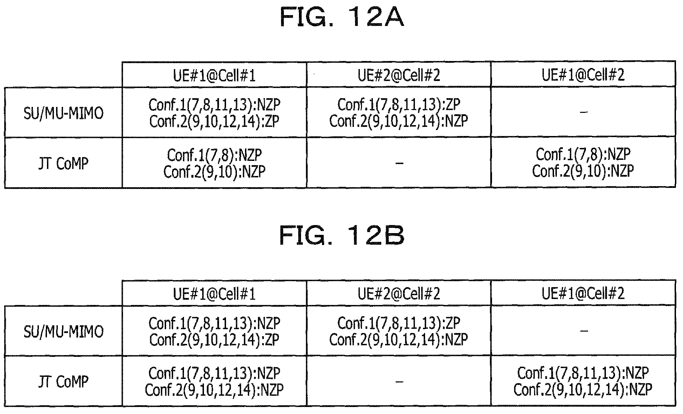

As an example of setting of pieces of configuration information of reference signals for the individual wireless terminals and use modes for the wireless terminals, tables in FIGs. 12A and 12B may be used instead of the table in FIG. 9. In the examples illustrated in FIGs. 12A and 12B, it is assumed that communication from the Cell#1 to the UE#2 is not performed in the same manner as in the example illustrated in FIG. 9.

The upper sections in the tables in FIGs. 12A and 12B illustrate a case in which a communication scheme from the Cell#1 to the UE#1 and a communication scheme from the Cell#2 to the UE#2 are the SU-MIMO communication or the MU-MIMO communication and communication from the Cell#2 to the UE#1 is not performed. The lower sections in the tables in FIGs. 12A and 12B illustrate a case in which a communication scheme from the Cell#1 to the UE#1 and a communication scheme from the Cell#2 to the UE#1 are the JT-Comp communication and communication from the Cell#2 to the UE#2 is not performed.

### [Third Embodiment]

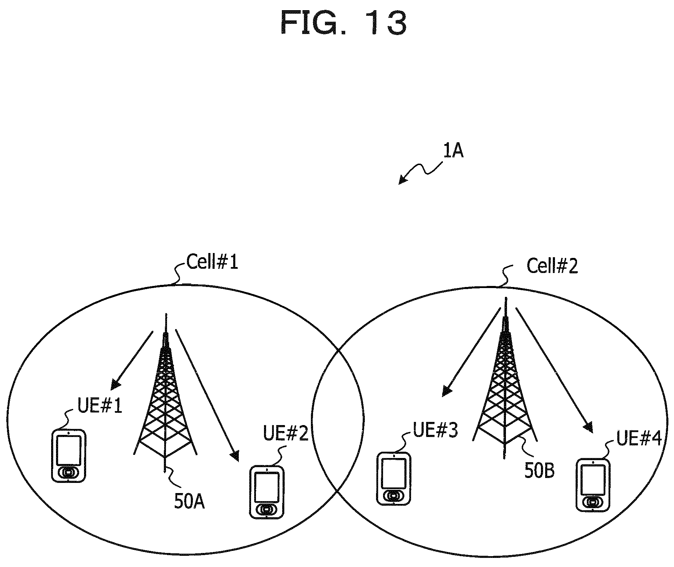

Next, a description will be given of a wireless communication system according to a third embodiment with reference to FIGs. 13 to 15. FIG. 13 illustrates a configuration of a wireless communication system 1A according to the third embodiment. As illustrated in FIG. 13, the wireless communication system 1A includes wireless stations 50A and 50B (also referred to as a Cell#1 and a Cell#2) and wireless terminals UE#1 to UE#4. An overall configuration of the wireless communication system according to the third embodiment is the same as those of the wireless communication systems according to the first and second embodiments. For example, each of the wireless stations 50A and 50B is connected to the network device 3 via wired connection or wireless connection, and the network device 3 is connected to the network 2 via wired connection or wireless connection. In addition, the wireless stations 50A and 50B are provided so as to be able to transmit and receive data and control information via the network device 3 and the network 2.

In addition, each of the wireless stations 50A and 50B includes an antenna and corresponds to a communication point. The wireless stations 50A and 50B form cells Cell#1 and Cell#2, respectively. The wireless stations 50A and 50B performs communication between the wireless stations 50A and 50B via wired connection or wireless connection. In addition, the wireless stations 50A and 50B can perform the single antenna communication and the MIMO communication with the UE#1 to the UE#4. Moreover, the wireless stations 50A and 50B can perform the CoMP communication with the UE#1 to the UE#4.

In the following description, it is assumed that the wireless station 50A is a wireless station (connected cell) connected to the UE#1 and the UE#2 and that the wireless station 50B is a wireless station (connected cell) connected to the UE#3 and the UE#4.

The connected wireless station 50A collectively performs the CoMP communication processing with the UE#1 and the UE#2 by the plurality of wireless stations 50A and 50B. The connected wireless station 50A selects a communication point (selected wireless station) used for the CoMP communication processing from among the wireless stations 50A and 50B. In such a case, the wireless station 50B corresponds to the different wireless station (hereinafter, also referred to as a cooperative wireless station or a cooperative cell) that is capable of performing the CoMP communication with the UE#1 and the UE#2.

The connected wired station 50B collectively performs the CoMP communication processing with the UE#3 and the UE#4 by the plurality of wireless stations 50A and 50B. The connected wireless station 50B selects a communication point (selected wireless station) used for the CoMP communication processing from among the wireless stations 50A and 50B. In such a case, the wireless station 50A corresponds to the different wireless station (hereinafter, also referred to as a cooperative wireless station or a cooperative cell) that is capable of performing the CoMP communication with the UE#3 and the UE#4.

Functional configurations and hardware configurations of the wireless stations 50A and 50B according to the third embodiment are the same as those of the wireless stations 50A and 50B according to the second embodiment as illustrated in FIG. 7. In addition, functional configurations and hardware configurations of the wireless terminals UE#1 to UE#4 according to the third embodiment are the same as those of the wireless terminal 70A according to the second embodiment as illustrated in FIG. 10.

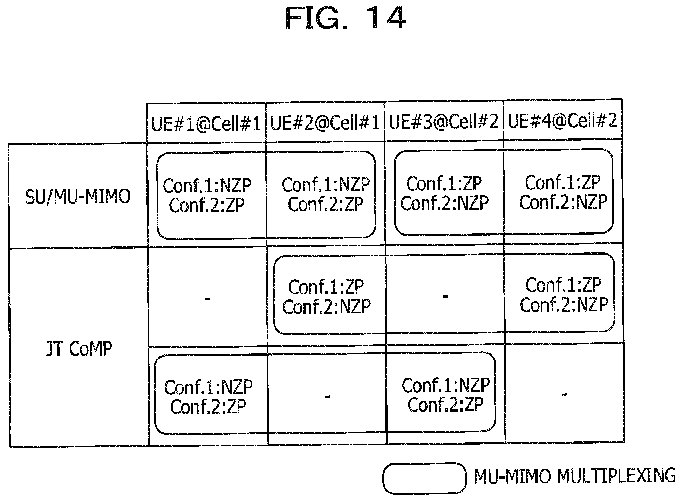

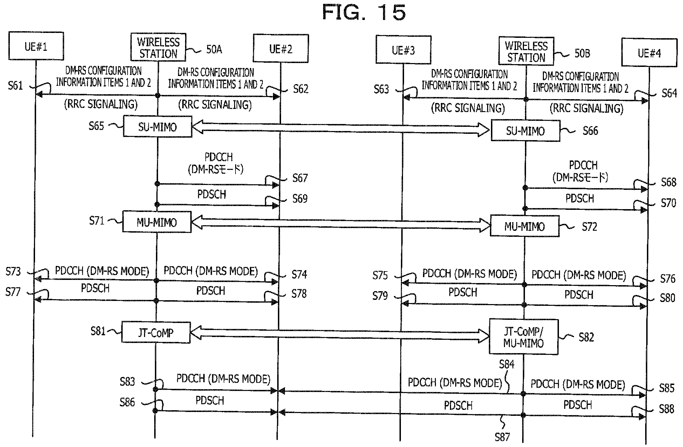

Next, a description will be given of operations of the wireless communication system 1A according to the third embodiment with reference to FIGs. 14 and 15. FIG. 14 is a table illustrating an exemplary setting of pieces of configuration information of reference signals for the individual wireless terminals and use modes for the wireless terminals according to the third embodiment. The upper section in the table in FIG. 14 illustrates a case in which the Cell#1 performs the MU-MIMO communication with the UE#1 and the UE#2 and the Cell#2 performs the MU-MIMO communication with the UE#3 and the UE#4 as communication schemes for transmitting signals. The intermediate section in the table in FIG. 14 illustrates a case in which the Cell#1 and the Cell#2 cooperate with each other and performs the JT-CoMP communication with the UE#2 and the Cell#2 performs the MU-MIMO communication with the UE#4. The lower section in the table in FIG. 14 illustrates a case in which the Cell#1 and the Cell#2 cooperate with each other and perform the JT-CoMP communication with the UE#3 and the Cell#1 performs the MU-MIMO communication with the UE#1.

FIG. 15 is a sequence diagram illustrating a downlink transmission operation performed by the wireless communication system 1A according to the third embodiment.

As illustrated in FIG. 15, the wireless station 50A provides a plurality of pieces of configuration information (DM-RS pieces of configuration information 1 and 2), which indicate radio resources reserved for transmitting reference signals for the individual wireless terminals, to the UE#1 and the UE#2 (S61 and S62). The DM-RS pieces of configuration information 1 and 2 are respectively provided from the wireless station 50A by RRC signaling when connection with the UE#1 and the UE#2 are established. Similarly, the wireless station 50B provided a plurality of pieces of configuration information (DM-RS pieces of configuration information 1 and 2), which indicate radio resources reserved for transmitting reference signals for the individual wireless terminals, to the UE#3 and the UE#4 (S63 and S64). The DM-RS pieces of configuration information 1 and 2 are provided from the wireless station 50B by RRC signaling when connection with the wireless terminals 70B and 70D are established, for example. The pieces of configuration information 1 and 2 are shared by the wireless stations 50A and 50B. Each of the pieces of configuration information 1 and 2 includes arrangement of resource elements, information of antenna ports, and the number of layers. In addition, the radio resources reserved based on the pieces of configuration information 1 and 2 are set so as to be different from each other.

Next, the wireless station 50A determines a communication scheme by which data is transmitted to the UE#1 to the UE#4 (S65). Similarly, the wireless station 50B determines a communication scheme by which data is transmitted to the UE#1 to the UE#4 (S66). At this time, the wireless station 50A and the wireless station 50B mutually exchange control information and obtain communication states. The communication schemes are determined every time data is transmitted, for example. The communication schemes are determined at a relatively shorter interval than that of connection establishment. As examples of the communication schemes, the JT-CoMP communication, the SU-MIMO communication, and the MU-MIMO communication can be selected.

In the example of S65, the wireless station 50A determines to perform the SU-MIMO communication, as a communication scheme, with the UE#2. In the example of S66, the wireless station 50B determines to perform the SU-MIMO communication, as a communication scheme, with the UE#4.

Specifically, the wireless station 50A determines not to perform the CoMP communication with the UE#2 in accordance with a communication level between the wireless station 50A and the UE#2 and a communication level between the wireless station 50B and the UE#2 when there is downlink data to the UE#2. In the case of S65, there is no downlink data to the UE#2 under control of the wireless station 50A, and the wireless station 50A does not perform communication with the UE#2. In addition, the wireless station 50A does not perform the CoMP communication with the UE#3 and the UE#4 under control of the wireless station 50B. Since the wireless station 50A does not perform communication with wireless terminals other than the UE#2 as described above, the wireless station 50A determines to perform the SU-MIMO communication, as a communication scheme, with the UE#2.

The communication level between the wireless station 50A and the UE#2 can be obtained by receiving reference signals, which are transmitted from the wireless station 50A and are unique to cells, by the UE#2 and transmitting measurement results from the UE#2 to the wireless station 50A. Alternatively, reference signals transmitted from the wireless terminal 70A may be received by the wireless station 50A, and measurement may be performed by the wireless station 50A. The communication level between the wireless station 50B and the UE#2 can be obtained by receiving reference signals, which are transmitted from the wireless station 50B and are unique to cells, by the UE#2 and transmitting measurement results from the UE#2 to the wireless station 50A. Alternatively, reference signals transmitted from the UE#2 may be received by the wireless station 50B, and measurement results may be transmitted from the wireless station 50B to the wireless station 50A for notification.

Similarly, the wireless station 50B determines not to perform the CoMP communication with the UE#4 in accordance with a communication level between the wireless station 50A and the UE#4 and a communication level between the wireless station 50B and the UE#4 when there is downlink data to the UE#4. In the case of S66, there is no downlink data to the UE#3 under control of the wireless station 50B, and the wireless station 50B does not perform communication with the UE#3. In addition, the wireless station 50B does not perform the CoMP communication with the UE#1 and the UE#2 under control of the wireless station 50A. Since the wireless station 50B does not perform communication with wireless terminals other than the UE#4 as described above, the wireless station 50B determines to perform the SU-MIMO communication, as a communication scheme, with the UE#4.

Furthermore, the wireless station 50A determines use modes (DM-RS modes) of the pieces of configuration information 1 and 2 for the UE#2 based on the determined communication scheme and other communication states. In addition, the wireless station 50B determines use modes of the pieces of configuration information 1 and 2 for the UE#4 based on the determined communication scheme and other communication states.

As examples of the use modes, it is possible to set a mode in which the reserved radio resources transmit the reference signals for the individual wireless terminals with predetermined transmission power (NZP), a mode in which the transmission power of the reference signals for the individual wireless terminals is set to zero (ZP), and a mode in which the radio resources reserved for the reference signals for the individual wireless terminals are allocated to data signals (OVR).

Specifically, in the example of S65, the wireless station 50A sets the use mode of the configuration information item 1 to "NZP" and sets the use mode of the configuration information item 2 to "ZP" as illustrated in the table in FIG. 14 based on the reason that the wireless station 50A performs the SU-MIMO communication with the UE#2 under control of the wireless station 50A. In the example of S66, the wireless station 50B sets the use mode of the configuration information item 1 to "ZP" and sets the use mode of the configuration information item 2 to "NZP" for the UE#4 as illustrated in the table in FIG. 14 based on the reason that the wireless station 50B performs the SU-MIMO communication with the UE#4 under control of the wireless station 50B.

As described above, the use modes of the pieces of configuration information 1 and 2 are determined such that the radio resources used for the reference signals for the individual wireless terminals, which are transmitted by the wireless station 50A to the UE#2, and the radio resources used for the reference signals for the individual wireless terminals, which are transmitted by the wireless station 50B to the UE#4, are different from each other as described above. In doing so, interference between the communication points is reduced when the DM-RS is transmitted, the precision of channel estimation for receiving data is improved, and the communication performance is improved.

Next, the wireless station 50A transmits signals indicating the respective use modes (DM-RS modes) of the pieces of configuration information 1 and 2 to the UE#2 through the PDCCH (S67). Similarly, the wireless station 50B transmits a signal (DM-RS modes) indicating the respective use modes of the pieces of configuration information 1 and 2 to the UE#4 through the PDCCH (S68). In doing so, it is possible to flexibly set the radio resources used for the reference signal for the individual wireless terminals which are transmitted by the wireless stations 50A and 50B to the wireless terminals 70A and 70B at a timing of communication scheme determination. In doing so, it is possible to further suppress an increase in signaling as compared with a case where the pieces of configuration information indicating the radio resources reserved for the reference signals for the individual wireless terminals are constantly provided at a timing of communication scheme determination, which is executed at a relatively short interval.

Then, the wireless station 50A transmits data to the UE#2 through the PDSCH (S69). In the example of S69, the wireless station 50A transmits the DM-RS by using the reserved resource elements and the antenna ports that are indicated by the configuration information item 1 in the use mode transmitted in S67 and transmits data by the SU-MIMO communication determined in S65. The UE#2 extracts the DM-RS from the received signal in the use mode transmitted in S67 and receives the data transmitted by the SU-MIMO communication, which is determined in S65, by using the extracted DM-RS.

Similarly, the wireless station 50B transmits data to UR#4 through the PDSCH (S70). In the example of S70, the wireless station 50B transmits the DM-RS by using the radio resources reserved based on the configuration information item 2 in the use mode transmitted in S68 and transmit data by the SU-MIMO communication determined in S66. The UE#4 extracts the DM-RS from the received signal in the use mode transmitted in S68 and receives the data transmitted by the SU-MIMO communication, which is determined in S66, by using the extracted DM-RS.

In S71 to S80 and S81 to S88, the wireless stations 50A and 50B execute the same processing as in S65 to S70.

Hereinafter, a description will be given of processing in S71 to S80. The wireless station 50A determines a communication scheme by which data is transmitted to the UE#1 to the UE#4 (S71). Similarly, the wireless station 50B determines a communication scheme by which data is transmitted to the UE#1 to the UE#4 (S72). At this time, the wireless station 50A and the wireless station 50B mutually exchange control information and obtain communication states.

In the example of S71, the wireless station 50A determines to perform the MU-MIMO communication, as a communication scheme, with the UE#1 and the UE#2. In the example of S71, the wireless station 50B determines to perform the MU-MIMO communication, as a communication scheme, with the UE#3 and the UE#4.

Specifically, the wireless station 50A determines not to perform the CoMP communication with the UE#1 in accordance with a communication level between the wireless station 50A and the UE#1 and a communication level between the wireless station 50B and the UE#1 if there is downlink data to the UE#1. In addition, the wireless station 50A determines not to perform the CoMP communication with the UE#2 in accordance with a communication level between the wireless station 50A and the UE#2 and a communication level between the wireless station 50B and the UE#2 if there is downlink data to the UE#2. In the case of S71, the wireless station 50A does not perform the CoMP communication with the UE#3 and the UE#4 under the control of the wireless station 50B as will be described later. Accordingly, the wireless station 50A determines to perform the MU-MIMO communication, as a communication scheme, with the UE#1 and the UE#2.

Similarly, the wireless station 50B determines not to perform the CoMP communication with the UE#3 in accordance with a communication level between the wireless station 50A and the UE#3 and a communication level between the wireless station 50B and the UE#3 if there is downlink data to the UE#3. In addition, the wireless station 50B determines not to perform the CoMP communication with the UE#4 in accordance with a communication level between the wireless station 50A and the UE#4 and a communication level between the wireless station 50B and the UE#4 if there is downlink data to the UE#4. In the case of S72, the wireless station 50B does not perform the CoMP communication with the UE#1 and the UE#2 under control of the wireless station 50A as described above. Accordingly, the wireless station 50B determines to perform the MU-MIMO communication, as a communication scheme, with the UE#3 and the UE#4.

Furthermore, the wireless station 50A determines use modes (DM-RS modes) of the pieces of configuration information 1 and 2 for the UE#1 and the UE#2 based on the determined communication scheme and other communication states. In addition, the wireless station 50B determines use modes (DM-RS modes) of the pieces of configuration information 1 and 2 for the UE#3 and the UE#4 based on the determined communication scheme and other communication states.

Specifically, in the example of S71, the wireless station 50A sets the use mode of the configuration information item 1 to "NZP" and sets the use mode of the configuration information item 2 to "ZP" as illustrated in the table in FIG. 14 based on the reason that the wireless station 50A performs the MU-MIMO communication with the UE#1 and the UE#2 under control of the wireless station 50A. In the example of S72, the wireless station 50B sets the use mode of the configuration information item 1 to "ZP" and sets the use mode of the configuration information item 2 to "NZP" for the UE#3 and the UE#4 as illustrated in the table in FIG. 14 based on the reason that the wireless station 50B performs the MU-MIMO communication with the UE#3 and the UE#4 under control of the wireless station 50B.

The use modes of the pieces of configuration information 1 and 2 are determined such that the radio resources used for the reference signals for the individual wireless terminals, which are transmitted by the wireless station 50A to the UE#1 and the UE#2, and the radio resources used for the reference signals for the individual wireless terminals, which are transmitted by the wireless station 50B to the UE#3 and the UE#4, are different from each other as described above. In doing so, interference between the communication points is reduced, the precision of channel estimation for receiving data is improved, and the communication performance is improved when the DM-RS is transmitted.

Next, the wireless station 50A transmits signals indicating the respective use modes (DM-RS modes) of the pieces of configuration information 1 and 2 to the UE#1 and the UE#2 through the PDCCH (S73 and S74). Similarly, the wireless station 50B transmits signals indicating the respective use modes (DM-RS modes) of the pieces of configuration information 1 and 2 to the UE#3 and the UE#4 through the PDCCH (S75 and S76).

Then, the wireless station 50A transmits data to the UE#1 and the UE#2 through the PDSCH (S77 and S78). In the example of S77 and S78, the wireless station 50A transmits the DM-RS by using the reserved resource elements and the antenna ports that are indicated by the configuration information item 1 in the use modes transmitted in S73 and S74, and transmits data by the MU-MIMO communication determined in S71. The UE#1 and the UE#2 extract the DM-RS from the received signals in the use modes transmitted in S73 and S74 and receives the data, which is transmitted by the MU-MIMO communication determined in S71, by using the extracted DM-RS.

Similarly, the wireless station 50B transmits data to the UE#3 and the UE#4 through the PDSCH (S79 and S80). In the example of S79 and S80, the wireless station 50B transmits the DM-RS by using the reserved radio resources indicated by the configuration information item 2 in the use modes transmitted in S75 and S76 and transmits data by the MU-MIMO communication determined in S72. The UE#3 and the UE#4 extract the DM-RS from the received signals in the use modes transmitted in S75 and S76 and receive data transmitted by the MU-MIMO communication, which is determined in S72, by using the extracted DM-RS.

Hereinafter, a description will be given of processing in S81 to S88. The wireless station 50A determines a communication scheme by which data is transmitted to the UE#1 to the UE#4 (S81). Similarly, the wireless station 50B determines communication schemes in which data is transmitted to the UE#1 to the UE#4 (S82). At this time, the wireless station 50A and the wireless station 50B mutually exchange control information and obtain communication states.

In the example of S81, the wireless station 50A determines to perform the CoMP communication, as a communication scheme, with the UE#2. In the example of S82, the wireless station 50B determines to perform the CoMP communication, as a communication scheme, with the UE#2 and determines to perform the MU-MIMO communication, as communication schemes, with the UE#4.

Specifically, the wireless station 50A determines whether or not to perform the CoMP communication with the UE#2 and determines a selected station from which signals are actually transmitted in the CoMP communication with the UE#2 in accordance with a communication level between the wireless station 50A and the UE#2 and a communication level between the wireless station 50B and the UE#2 if there is downlink data to the UE#2.

If the wireless stations 50A and 50B are selected as selected wireless stations that perform the CoMP communication with the UE#2, the wireless station 50A transmits a signal for requesting the CoMP communication to the wireless station 50B. If the wireless station 50B can cooperate with the wireless station 50A and execute the CoMP communication with the UE#2, the wireless station 50B transmits a response signal indicating that the wireless station 50B can execute the CoMP communication, and reserves for the CoMP communication with the UE#2. The wireless station 50A receives the response signal, reserves for the CoMP communication with the UE#2, and determines the CoMP communication, as a communication scheme, with the UE#2. In the case of S81, there is no downlink data to the UE#1 under control of the wireless station 50A, and the wireless station 50A does not perform communication with the UE#1. In addition, the wireless station 50A does not perform CoMP communication with the UE#3 and the UE#4 under control of the wireless station 50B as will be described later.

Similarly, the wireless station 50B determines not to perform the CoMP communication with the UE#4 in accordance with a communication level between the wireless station 50A and the UE#4 and a communication level between the wireless station 50B and the UE#4 if there is downlink data to the UE#4. In the case of S82, there is no downlink data to the UE#3 under control of the wireless station 50B, and the wireless station 50B does not perform communication with the UE#3. In addition, the wireless station 50B does not perform the CoMP communication with the UE#1 under control of the wireless station 50A. Moreover, the wireless station 50B transmits the response signal indicating that the wireless station 50B can cooperate with the wireless station 50A and execute the CoMP communication with the UE#2 as described above, reserves for the CoMP communication with the UE#2, and determines the CoMP communication, as a communication scheme, with the UE#2. Then, the wireless station 50B determines to perform the MU-MIMO communication, as a communication scheme, with the UE#4.

Furthermore, the wireless station 50A determines use modes of the pieces of configuration information 1 and 2 for the UE#2 based on the determined communication scheme and other communication states. In addition, the wireless station 50B determines use modes of the pieces of configuration information 1 and 2 for the UE#2 and the UE#4 based on the determined communication scheme and other communication states.

Specifically, in the example of S81, the wireless station 50A sets the use mode of the configuration information item 1 to "ZP" and sets the use mode of the configuration information item 2 to "NZP" as illustrated in the table in FIG. 14 based on the reasons that the wireless station 50A cooperates with the wireless station 50B and performs the JT-CoMP communication with the UE#2, that the wireless station 50A itself does not perform communication with wireless terminals other than the UE#2, and that the wireless station 50B performs the MU-MIMO communication with the UE#4. In the example of S82, the wireless station 50B sets the use mode of the configuration information item 1 to "NZP" and sets the use mode of the configuration information item 2 to "ZP" for the UE#2 and the UE#4 as illustrated in the table in FIG. 14 based on the reasons that the wireless station 50B cooperates with the wireless station 50A and performs the JT-CoMP communication with the UE#2, that the wireless station 50A does not perform communication with wireless terminals other than the UE#2, and that the wireless station 50B itself performs the MU-MIMO communication with the UE#4.

The use modes of the pieces of configuration information 1 and 2 are appropriately determined such that the radio resources used for the reference signals for the individual wireless terminals, which are transmitted by the wireless stations 50A and 50B to the UE#2, are the same when the wireless station 50A and the wireless station 50B performs the CoMP communication with the UE#2. In addition, the communication performance of transmitting the reference signals for the individual wireless terminals for the UE#2 is improved by the wireless station 50A and the wireless station 50B performing the CoMP communication with the UE#2. Accordingly, it is possible to assume that the communication performance can be maintained even if the radio resources used for transmitting the reference signals for the individual wireless terminals for the UE#2 and the radio resources used for transmitting the reference signals for the individual wireless terminals for the UE#4 are the same. In the example of S82, it is possible to allocate the configuration information item 1, which is not used, to transmission of the reference signals for the individual wireless terminals by different wireless stations that are present in the circumference and to set the radio resources to be different from each other between communication points. In the example of S82, it is also possible to improve a throughput by using the configuration information item 1, which is not used, for transmitting data. In the example of S82, the wireless station 50B may set the use mode of the configuration information item 1 to "NZP" and set the use mode of the configuration information item 2 to "ZP" for the UE#2, may set the use mode of the configuration information item 1 to "ZP" and set the use mode of the configuration information item 2 to "NZP" for the UE#4, and may set the radio resources so as to be different from each other between the communication with the UE#2 and the communication with the UE#4.

Next, the wireless station 50A transmits signals indicating the respective use modes of the pieces of configuration information 1 and 2 for the UE#2 to the UE#2 through the PDCCH (S83). Similarly, the wireless station 50B transmits signals indicating the use modes of the pieces of configuration information 1 and 2 for the UE#2 to the UE#2 through the PDCCH (S84), and transmits signals indicating the respective use modes of the pieces of configuration information 1 and 2 for the UE#4 to the UE#4 through the PDCCH (S85).

Then, the wireless stations 50A and 50B cooperate with each other and transmit data to the UE#2 through the PDSCH (S86 and S87). In addition, the wireless station 50B transmits data to the UE#4 through the PDSCH (S88).

According to the third embodiment, it is possible to efficiently allocate the radio resources reserved for transmitting the reference signals for the individual wireless terminals from the wireless stations and improve the communication performance in the wireless communication system as described above.

### [Fourth Embodiment]

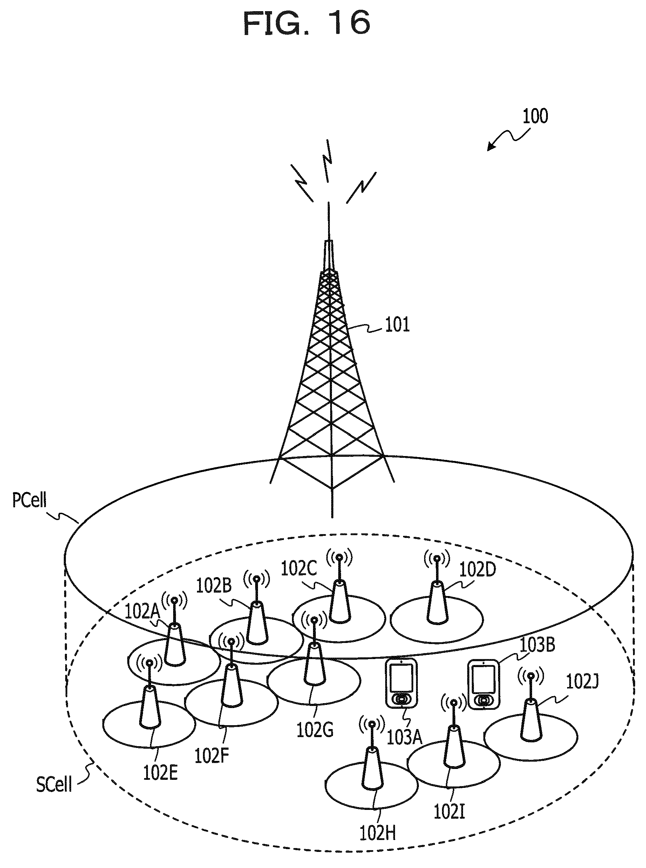

Next, a description will be given of a wireless communication system 100 according to a fourth embodiment with reference to FIG. 16. The wireless communication system 100 includes wireless stations 101 and 102A to 102J and wireless terminals 103A and 103B. In the fourth embodiment, the wireless station 101 forms a primary cell (PCell), and the wireless stations 102A to 102J form secondary cells (SCells). SCells are cells with more limited functions as that of the PCell in some cases. As examples of limited functions, transmission of uplink control information (ACK, NACK, CQI, and the like) of a layer 1 only through uplink communication of PCell is exemplified. The wireless station 101 corresponds to a cell (macro cell) with a relatively large scale, and the wireless stations 102A to 102J correspond to cells (small cells) with relatively small scales. The wireless communication system 100 is also referred to as a heterogeneous network in which wireless stations with different cell ranges are present together.

In a carrier aggregation operation for dynamically jointing a plurality of component carriers, for example, the PCell is a serving cell (connected cell) of a primary component carrier (PCC), and the SCells are serving cells (connected cells) of secondary component carriers (SCCs). For example, the PCC is switched by handover while the SCCs are added or deleted as occasion calls.

Functional configurations and hardware configurations of the wireless stations 101 and 102A to 102J according to the fourth embodiment are the same as those of the wireless stations 50A and 50B according to the second embodiment as illustrated in FIG. 7. However, the functions of the wireless stations 102A to 102J are further limited than the functions of the wireless station 101 as described above. Functional configurations and hardware configurations of the wireless terminals 103A and 103B according to the fourth embodiment are the same as that of the wireless terminal 70A according to the second embodiment as illustrated in FIG. 10.

Next, a description will be given of a downlink transmission operation performed by the wireless communication system 100 according to the fourth embodiment. The wireless station 101 respectively provides a plurality of pieces of configuration information (DM-RS pieces of configuration information 1 and 2), which indicate radio resources reserved for transmitting reference signals for the individual wireless terminals, to the wireless terminals 103A and 103B by RRC signaling when connection with the wireless terminals 103A and 103B is established.

Next, the wireless station 101 exchange control information with a wireless station around the wireless terminal 103A from among the wireless stations 102A to 102J and determines a communication scheme by which data is transmitted to the wireless terminal 103A. Similarly, the wireless station 101 exchange control information with a wireless station around the wireless terminal 103B from among the wireless stations 102A to 102J and determines a communication scheme by which data is transmitted to the wireless terminal 103B. The communication schemes are determined every time data is transmitted, for example. The communication schemes are determined at a relatively shorter interval than that of connection establishment.

Furthermore, the wireless station, from which data is actually transmitted to the wireless terminal 103A, from among the wireless stations 101 and 102A to 102J determines use modes (DM-RS modes) of the pieces of configuration information 1 and 2 for the wireless terminal 103A based on the determined communication scheme and other communication states. In addition, the wireless station, from which data is actually transmitted to the wireless terminal 103B, from among the wireless stations 101 and 102A to 102J determines use modes (DM-RS modes) of the pieces of configuration information 1 and 2 for the wireless terminal 103B based on the determined communication scheme and other communication states. If the communication scheme is not the JT-CoMP communication, for example, at this time, the use modes of the pieces of configuration information 1 and 2 are determined such that the radio resources used for the DM-RS which is transmitted by the wireless station to the wireless terminal 103A and the radio resources used for the DM-RS which is transmitted by the wireless station to the wireless terminal 103B are different from each other. In doing so, interference between the communication points is reduced when the DM-RS is transmitted, the precision of channel estimation for receiving data is improved, and the communication performance is improved. In a case of the JT-CoMP communication, for example, the use modes of the pieces of configuration information 1 and 2 are appropriately determined such that the radio resources used for the DM-RS, which is transmitted by the plurality of wireless stations performing the CoMP communication to the wireless terminals, are the same.

Next, the wireless station, from which data is actually transmitted to the wireless terminal 103A, from among the wireless stations 101 and 102A to 102J transmits signals indicating the respective use modes (DM-RS modes) of the pieces of configuration information 1 and 2 to the wireless terminal 103A through the PDCCH. Similarly, the wireless station, from which data is actually transmitted to the wireless terminal 103B, from among the wireless stations 101 and 102A to 102J transmits signals indicating the respective use modes (DM-RS modes) of the pieces of configuration information 1 and 2 to the wireless terminal 103B through the PDCCH. In doing so, it is possible to flexibly set the radio resources used for the DM-RS, which is transmitted by the wireless stations to the wireless terminals 103A and 103B, at a timing of the communication scheme determination. In doing so, it is possible to further suppress an increase in signaling as compared with a case where the pieces of configuration information indicating the radio resources reserved for the DM-RS are constantly provided at the timing of communication scheme determination, which is executed at a relatively short interval.

Then, the wireless station, from which data is actually transmitted to the wireless terminal 103A, from among the wireless stations 101 and 102A to 102J transmits the DM-RS in the transmitted use mode and transmits the data by the determined communication scheme. The wireless terminal 103A extracts the DM-RS from the received signal in the transmitted use mode and receives data transmitted by the determined communication scheme by using the extracted DM-RS. Similarly, the wireless station, from which data is actually transmitted to the wireless terminal 103B, from among the wireless stations 101 and 102A to 102J transmits the DM-RS in the transmitted use mode and transmits the data by the determined communication scheme. The wireless terminal 103B extracts the DM-RS from the received signal in the transmitted use mode and receives the data transmitted by the determined communication scheme by using the extracted DM-RS. Thereafter, the determination of communication schemes, determination of use modes of the pieces of configuration information, notification of the determined use modes, and transmission of data are repeated every time data is transmitted, for example.

According to the fourth embodiment, it is possible to efficiently allocate the radio resources reserved for transmitting the reference signals for the individual wireless terminals, which are transmitted from the wireless stations, and to improve the communication performance in the wireless communication system as described above.

### [Fifth Embodiment]

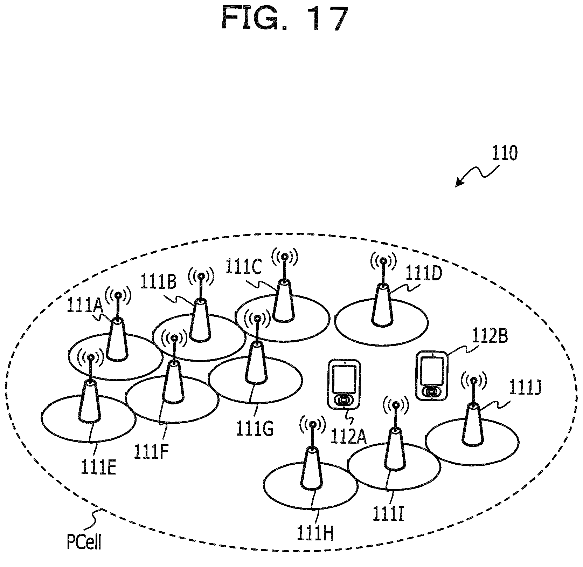

Next, a description will be given of a wireless communication system 110 according to a fifth embodiment with reference to FIG. 17. The wireless communication system 110 includes wireless stations 111A to 111J and wireless terminals 112A and 112B. In the fifth embodiment, the wireless stations 111A to 111J form primary cells (PCells).

Functional configurations and hardware configurations of the wireless stations 111A to 111J according to the fifth embodiment are the same as those of the wireless stations 50A and 50B according to the second embodiment as illustrated in FIG. 7. Functional configurations and hardware configurations of the wireless terminals 112A and 112B according to the fifth embodiment are the same as those of the wireless terminal 70A according to the second embodiment as illustrated in FIG. 10.

Next, a description will be given of a downlink transmission operation performed by the wireless communication system 110 according to the fifth embodiment. A connected wireless station from among the wireless stations 111A to 111J respectively provides a plurality of pieces of configuration information (DM-RS pieces of configuration information 1 and 2), which indicate radio resources reserved for transmitting reference signals for the individual wireless terminals, to the wireless terminals 112A and 112B by RRC signaling when connection with the wireless terminals 112A and 112B is established, for example.

Next, the connected wireless station from among the wireless stations 111A to 111J exchange control information with a wireless station around the wireless terminal 112A from among the wireless stations 111A to 111J and determines a communication scheme by which data is transmitted to the wireless terminal 123A. Similarly, the connected wireless station from among the wireless station 111A to 111J exchanges control information with a wireless station around the wireless terminal 112B from among the wireless stations 112A to 112J and determines a communication scheme by which data is transmitted to the wireless terminal 112B. The communication schemes are determined every time data is transmitted, for example. The communication schemes are determined at a relatively shorter interval than that of connection establishment.

Furthermore, the wireless station, from which data is actually transmitted to the wireless terminal 112A, from among the wireless stations 111A to 111J determines use modes (DM-RS modes) of pieces of configuration information 1 and 2 for the wireless terminal 112A based on the determined communication scheme and other communication states. In addition, the wireless station, from which data is actually transmitted to the wireless terminal 112B, from among the wireless stations 111A to 111J determines use modes (DM-RS modes) of pieces of configuration information 1 and 2 for the wireless terminal 112B based on the determined communication scheme and other communication states. If the communication scheme is not the JT-CoMP communication, for example, at this time, the use modes of the pieces of configuration information 1 and 2 are determined such that the radio resources used for the DM-RS which is transmitted by the wireless station to the wireless terminal 112A and the radio resources used for the DM-RS which is transmitted by the wireless station to the wireless terminal 112B are different from each other. In doing so, interference between the communication points is reduced when the DM-RS is transmitted, the precision of channel estimation for receiving data is improved, and the communication performance is improved. In a case of the JT-CoMP communication, for example, the use modes of the pieces of configuration information 1 and 2 are appropriately determined such that the radio resources used for the DM-RS which is transmitted by the plurality of wireless stations preforming the CoMP communication to the wireless terminals.

Next, the wireless station, from which data is actually transmitted to the wireless terminal 112A, from among the wireless stations 111A to 111J transmits signals indicating the respective use modes (DM-RS modes) of the pieces of configuration information 1 and 2 to the wireless terminal 112A through the PDCCH. Similarly, the wireless station, from which data is actually transmitted to the wireless terminal 112B, from among the wireless stations 111A to 111J transmits signals indicating the respective use modes (DM-RS modes) of the pieces of configuration information 1 and 2 to the wireless terminal 112B through the PDCCH. In doing so, it is possible to flexibly set the radio resources used for the DM-RS transmitted by the wireless stations, from which data is actually transmitted, from among the wireless stations 111A to 111J to the wireless terminals 112A and 112B at the timing of the communication scheme determination. In doing so, it is possible to further suppress an increase in signaling as compared with a case where the pieces of configuration information indicating the radio resources reserved for the DM-RS are constantly provided at a timing of communication scheme determination, which is executed at a relatively short interval.

Then, the wireless station, from which data is actually transmitted to the wireless terminal 112A, from among the wireless stations 111A to 111J transmits the DM-RS in the transmitted use mode and transmits data by the determined communication scheme. The wireless terminal 112A extracts the DM-RS from the received signal in the transmitted use mode and receives the data transmitted by the determined communication scheme by using the extracted DM-RS. Similarly, the wireless station, from which data is actually transmitted to the wireless terminal 112B, from among the wireless stations 111A to 111J transmits the DM-RS in the transmitted use mode and transmits the data by the determined communication scheme. The wireless terminal 112B extracts the DM-RS from the received signal in the transmitted use mode and receives the data transmitted by the determined communication scheme by using the extracted DM-RS. Thereafter, the determination of communication schemes, determination of use modes of the pieces of configuration information, notification of the determined use modes, and transmission of data are repeated every time data is transmitted, for example.

According to the fifth embodiment, it is possible to efficiently allocate the radio resources reserved for transmitting the reference signals for the individual wireless terminals, which are transmitted from the wireless stations, and to improve the communication performance in the wireless communication system as described above.

The wireless communication systems according to the first to fifth embodiments can be realized as LTE-A systems, for example. In addition, it is also possible to apply the wireless communication systems to wireless communication systems using a communication method other than LTE-A.

In the first to fifth embodiments, the wireless terminals are also referred to as mobile stations and user equipment (UE). In the first to fifth embodiments, the wireless terminals can be applied to mobile terminals such as mobile phones, smart phones, and personal digital assistant (PDA). In addition, the first to fifth embodiments can be applied to other various communication devises that perform communication with wireless stations, such as mobile relay stations.

In the first to fifth embodiments, the wireless stations are also referred to as base stations, wireless base stations, or access points. In the first to fifth embodiments, the wireless stations can be applied to base stations with various scales, such as macro base stations, pico base stations, and femto base stations. In addition, the first to fifth embodiments can be applied to other various communication devices that perform communication with wireless terminals, such as relay stations.

In the first to fifth embodiments, the wireless communication systems can be realized such that wireless stations are provided as base stations, for example. In such a case, each of the wireless stations can be realized as an independent eNodeB (evolved NodeB). Alternatively, in the first to fifth embodiments, the wireless communication systems can be realized such that a part of the wireless stations are provided as control units of base stations and the other part of the wireless stations are provided as remote units of the base stations, for example. In such a case, each control unit can be realized as a center eNodeB, and each remote unit can be realized as a remote radio head (RRH) included in the center eNodeB, for example. For example, the control units are connected to the remote units via wired connection such as optical cables. The control units form cells, and the remote units form covered areas that respectively overlap with the cells. In such a case, the control units and the remote units may use common cell identification information.

In addition, specific configurations in which the respective components in the wireless stations and the wireless terminals are separately or integrally provided are not limited to the configurations according to the first to fifth embodiments, and an entirety or a part thereof can be functionally or physically provided in a separate or integrated manner in arbitrary units in accordance with various burdens, use conditions, and the like. For example, memories may be connected as external devices of the wireless stations and the wireless terminals via a network or a cable.

### Reference Signs List

1, 1A, 100, 110: wireless communication system
2: network
3: network device
10A, 10B, 50A, 50B, 101, 102A to 102J, 111A to 111J: wireless station
20A, 20B, 70A, 70B, UEs #1 to #4, 103A, 103B, 112A, 112B: wireless terminal
C10A, C10B, Cells #1 and #2, PCell, SCell: cell
11, 21: receiving unit
12, 22: transmission unit
13, 23: control unit
31, 41: antenna
32, 42: RF circuit
33, 43: CPU
34: DSP
35, 44: memory
36: network IF
51A, 51B: receiving antenna
52A, 52B: receiving RF unit
53A, 53B: FFT unit
54A, 54B: physical channel separation unit
55A, 55B: signal demodulation unit
56A, 56B: channel estimation unit
57A, 57B: receiving level measurement unit
58A, 58B: communication control unit
59A, 59B: upper-order layer data processing unit
60A, 60B: signal generation unit
61A, 61B: reference signal generation unit
62A, 62B: physical channel multiplexing unit
63A, 63B: IFFT unit
64A, 64B: transmission RF unit
65A, 65B: transmission antenna
71: receiving antenna
72: receiving RF unit
73: FFT unit
74: physical channel separation unit
75: signal demodulation unit
76: channel estimation unit
77: receiving level measurement unit
78: communication control unit
79: upper-order layer data processing unit
80: signal generation unit
81: reference signal generation unit
82: physical channel multiplexing unit
83: IFFT unit
84: transmission RF unit
85: transmission antenna

## Claims

1. A wireless communication method comprising:
obtaining a plurality of pieces of configuration information from a wireless station by a wireless terminal, the plurality of pieces of configuration information indicating radio resources reserved for transmitting reference signals for individual wireless terminals,
transmitting signals from the wireless station to the wireless terminal, the signals designating use modes in relation to use of the radio resources that are indicated by the plurality of respective pieces of configuration information; and
receiving the signals by the wireless terminal and performing communication with the wireless station by using the reference signals for the individual wireless terminals, which are transmitted from the wireless station by the radio resources allocated in accordance with the use modes.

2. The wireless communication method according to claim 1,
wherein the reserved radio resources indicated by the plurality of pieces of configuration information differ from each other.

3. The wireless communication method according to claim 1 or 2,
wherein the reserved radio resources indicated by the plurality of pieces of configuration information are arranged so as to perpendicularly intersect each other.

4. The wireless communication method according to any one of claims 1 to 3,
wherein the plurality of pieces of configuration information are provided from the wireless station to the wireless terminal when connection is established.

5. The wireless communication method according to any one of claims 1 to 4,
wherein the signals designating the use modes are transmitted from the wireless station to the wireless terminal when data is transmitted.

6. The wireless communication method according to any one of claims 1 to 5,
wherein the wireless station determines the respective use modes of the plurality of pieces of configuration information in accordance with communication states.

7. The wireless communication method according to any one of claims 1 to 6,
wherein the wireless station obtains a communication state of a different wireless station that is capable of performing Coordinate Multi-Point (CoMP) communication, determines a communication scheme by which data is transmitted, and determines the respective use modes of the plurality of pieces of configuration information when the data is transmitted.

8. The wireless communication method according to any one of claims 1 to 7,
wherein the wireless station determines the respective use modes of the plurality of pieces of configuration information in accordance with at least one of whether or not the wireless station transmits data to the wireless terminal by Coordinate Multi-Point (CoMP) communication with the different wireless station, the number of wireless terminals to which the wireless station is connected, a communication level between the wireless station and the wireless terminals being connected, the number of wireless terminals to which the different wireless station is connected, a communication level between the different wireless station and the wireless terminals being connected, a communication scheme by which the data is transmitted from the wireless station, and a communication scheme by which the data is transmitted from the different wireless station.

9. The wireless communication method according to claim 7 or 8,
wherein the communication scheme includes at least one of multi-input multi-output (MIMO) communication and CoMP communication.

10. The wireless communication method according to any one of claims 1 to 9,
wherein the number of wireless terminals is two or more,
wherein the plurality of pieces of configuration information are set commonly to the plurality of wireless terminals, and
wherein the use modes are individually designated for the plurality of wireless terminals.

11. The wireless communication method according to any one of claims 1 to 10,
wherein the plurality of pieces of configuration information are shared by the wireless station and the different wireless station that is capable of performing the Coordinate Multi-Point (CoMP) communication with the wireless station.

12. The wireless communication method according to any one of claims 1 to 11,
wherein the use modes include a mode in which the radio resources reserved for the reference signals for the individual wireless terminals transmit the reference signals for the individual wireless terminals with predetermined transmission power, a mode in which the transmission power of the reference signals for the individual wireless terminals is set to zero, and a mode in which the radio resources reserved for the reference signals for the individual wireless terminals are allocated to data signals.

13. A wireless communication system comprising:
a wireless station; and
a wireless terminal,
wherein the wireless terminal obtains a plurality of pieces of configuration information from the wireless station, the plurality of configuration information indicating radio resources reserved for transmitting reference signals for individual wireless terminals,
wherein the wireless station transmits signals to the wireless terminal, the signals designating use modes in relation to use of the radio resources that are indicated by the plurality of respective pieces of configuration information; and
wherein the wireless terminal performs communication with the wireless station by using the reference signals for the individual wireless terminals, which are transmitted from the wireless station by the radio resources allocated in accordance with the use modes.

14. A wireless station comprising:
a transmission unit that transmits signals to a wireless terminal, the signals designating use modes in relation to use of radio resources indicated by a plurality of respective pieces of configuration information, which indicate the radio resources reserved for transmitting reference signals for individual wireless terminals from the wireless station, the plurality of pieces of configuration information being obtained by the wireless terminal; and
a control unit that performs communication with the wireless terminal by using the reference signals for the individual wireless terminals, which are transmitted by the radio resources allocated in accordance with the use modes.

15. A wireless terminal comprising:
a control unit that obtains a plurality of pieces of configuration information from a wireless station, the plurality of configuration information indicating radio resources reserved for transmitting reference signals for individual wireless terminals; and
a receiving unit that receives signals from the wireless station, the signals indicating use modes in relation to use of the radio resources indicated by the plurality of respective pieces of configuration information,
wherein the control unit performs communication with the wireless station by using the reference signals for the individual wireless terminals, which are transmitted from the wireless station by the radio resources allocated in accordance with the use modes.
